# EUROPEAN PATENT APPLICATION

(11) **EP 4 800 510 A1**
(43) Date of publication of application: **02.09.2026**
(21) Application number: 26159332.1
(22) Date of filing: 18.02.2026
(51) Int. Cl.: G05D 1/244, A01B 69/00, G05D 1/661

(54) **AUTONOMOUS AGRICULTURAL SYSTEM INCLUDING GUIDANCE SYSTEM FOR IDENTIFYING AND SELECTING A TRANSPORT VEHICLE BASED ON MARKERS OF THE TRANSPORT VEHICLE AND RELATED METHODS**

(30) Priority: 27.02.2025 US 202563764434 P
(71) Applicant: AGCO International GmbH, 8212 Neuhausen am Rheinfall (CH); PTx Trimble LLC, Westminster, CO 80021 (US)
(72) Inventor: Christiansen, Martin Peter, 8930 Randers (DK); Mujkic, Esma, 8930 Randers (DK); Steen, Kim Arild, 8930 Randers (DK); Beck, Nicolai, 8930 Randers (DK); Toustrup, Viktor Johns, 8930 Randers (DK); Murman, Josh, Rising City, 68658 (US)
(74) Representative: AGCO Intellectual Property Department

(57) **Abstract**

An agricultural vehicle having a cart operably coupled thereto. The agricultural vehicle including: a guidance system for controlling operation of the agricultural vehicle and the cart and configured to cause the guidance system to: capture image data of each transport vehicle of a plurality of transport vehicles via at least one sensor and compare a respective marker of each transport vehicle of the plurality of transport vehicles with a preselected marker stored within a database consecutively until a match between a given respective marker of a transport vehicle of the plurality of transport vehicles and the preselected marker is identified; identify the transport vehicle of the plurality of transport vehicles having the given respective marker that matches the preselected marker stored within the database as a target transport vehicle; and responsive to identifying the target transport vehicle, cause the agricultural vehicle to automatically align with the target transport vehicle.

## Description

### CROSS-REFERENCE TO RELATED APPLICATIONS

### BACKGROUND

In harvesting applications, a grain cart is an intermediary vehicle that collects a commodity (e.g., grain) from a combine harvester and transfers it to transport vehicles. Typically, operation of the grain cart has required relatively precise coordination between operators of the combine harvester, the grain cart, and the transport vehicles. Miscommunication and/or errors in timing and positioning can result in inefficient commodity transfer, spillage, and/or damage to one or more of the combine harvester, the grain cart, and the transport vehicles.

### BRIEF SUMMARY

One or more embodiments include a guidance system for controlling operation of an agricultural vehicle, comprising: at least one processor; and at least one non-transitory computer-readable storage medium storing instructions thereon that, when executed by the at least one processor, cause the guidance system, during an agricultural operation, to: capture image data of at least one transport vehicle via at least one sensor of the agricultural vehicle; analyze the captured image data to determine whether the at least one transport vehicle comprises a single transport vehicle or a plurality of transport vehicles; responsive to determining that the at least one transport vehicle comprises a single transport vehicle, capture additional image data of the single transport vehicle and verify that a marker of the single transport vehicle matches a preselected marker stored within a database; responsive to verifying that the marker of the single transport vehicle matches the preselected marker, cause the agricultural vehicle to automatically align with the detected single transport vehicle; responsive to determining that the at least one transport vehicle comprises a plurality of transport vehicles, capture additional image data of each transport vehicle of the plurality of transport vehicles via the at least one sensor of the agricultural vehicle and compare a respective marker of each transport vehicle of the plurality of transport vehicles with the preselected marker stored within the database consecutively until a match between a given respective marker of a transport vehicle of the plurality of transport vehicles and the preselected marker is identified, identify the transport vehicle of the plurality of transport vehicles having the given respective marker that matches the preselected marker stored within the database as a target transport vehicle; and responsive to identifying the target transport vehicle, cause the agricultural vehicle to automatically align with the target transport vehicle.

The guidance system may further include instructions that, when executed by the at least one processor, cause the guidance system to determine a position of the target transport vehicle relative to the agricultural vehicle based at least partially on at least one of the captured image data or the captured additional image data.

The at least one sensor of the agricultural vehicle may include at least one of a light detection and ranging (LIDAR) camera, an RGB camera, a stereo camera, a polarized camera, a thermal camera, an ultrasonic sensor, or a radio detection and ranging (RADAR) device.

The at least one sensor of the agricultural vehicle may include both an RGB camera and a light detection and ranging (LIDAR) camera.

Determining whether the at least one transport vehicle includes a single transport vehicle or a plurality of transport vehicles may include determining how many transport vehicles are present within an unloading area of an agricultural field.

Determining how many transport vehicles are present within an unloading area of an agricultural field may include analyzing the image data to detect how many transport vehicles are present within the unloading area of the agricultural field

Analyzing the image data may include utilizing one or more machine learning models to identify and classify one or more objects depicted within the image data.

Analyzing the image data may include utilizing a convolutional neural network (CNN) to identify and classify one or more objects depicted within the image data.

Capturing the image data related to at least one transport vehicle may be triggered by the agricultural vehicle crossing a virtual boundary.

Causing the agricultural vehicle to automatically align with either the detected single transport vehicle or the target transport vehicle may include determining a path between a current position of the agricultural vehicle and an aligned position relative to the detected single transport vehicle or the target transport vehicle.

The aligned position may include a position and orientation of the agricultural vehicle relative to a determined position of the detected single transport vehicle or the target transport vehicle that aligns the agricultural vehicle for unloading a commodity into a trailer of the detected single transport vehicle or the target transport vehicle.

The respective marker of each transport vehicle of the plurality of transport vehicles may include a license plate.

The respective marker of each transport vehicle of the plurality of transport vehicles may include at least one of a text marker, a quick response (QR) code, a barcode, an aztec code, a data matrix code, a PDF417 code, a micro QR code, or an iQR code

Capturing additional image data of each transport vehicle of the plurality of transport vehicles via the at least one sensor of the agricultural vehicle consecutively until a match between a given respective marker of a transport vehicle of the plurality of transport vehicles and the preselected marker is identified may include capturing additional image data of a number of transport vehicles that is fewer and a total number of transports vehicles of the plurality of transport vehicles.

Capturing additional image data of each transport vehicle of the plurality of transport vehicles via the at least one sensor of the agricultural vehicle consecutively until a match between a given respective marker of a transport vehicle of the plurality of transport vehicles and the preselected marker is identified may include capturing additional image data of every transport vehicle of the plurality of transport vehicles.

Causing the agricultural vehicle to automatically align with either the detected single transport vehicle or the target transport vehicle may include causing both the agricultural vehicle and a cart to automatically align with either the detected single transport vehicle or the target transport vehicle.

One orm ore embodiments include a method of guiding operation of an agricultural vehicle during an agricultural operation, the method comprising: capturing image data of at least one transport vehicle via at least one sensor of the agricultural vehicle; analyzing the captured image data to determine whether the at least one transport vehicle comprises a single transport vehicle or a plurality of transport vehicles; responsive to determining that the at least one transport vehicle comprises a single transport vehicle, capturing additional image data of the single transport vehicle and verify that a marker of the single transport vehicle matches a preselected marker stored within a database; responsive to verifying that the marker of the single transport vehicle matches the preselected marker, causing the agricultural vehicle to automatically align with the detected single transport vehicle; responsive to determining that the at least one transport vehicle comprises a plurality of transport vehicles, capturing additional image data of each transport vehicle of the plurality of transport vehicles via the at least one sensor of the agricultural vehicle and comparing a respective marker of each transport vehicle of the plurality of transport vehicles with the preselected marker stored within the database consecutively until a match between a given respective marker of a transport vehicle of the plurality of transport vehicles and the preselected marker is identified; identifying the transport vehicle of the plurality of transport vehicles having the given respective marker that matches the preselected marker stored within the database as a target transport vehicle; and responsive to identifying the target transport vehicle, causing the agricultural vehicle to automatically align with the target transport vehicle.

Analyzing the image data may include utilizing one or more machine learning models to identify and classify one or more objects depicted within the image data.

Analyzing the image data may include utilizing a convolutional neural network (CNN) to identify and classify one or more objects depicted within the image data.

Capturing the image data related to at least one transport vehicle may be triggered by the agricultural vehicle crossing a virtual boundary.

One or more embodiments include an agricultural vehicle having a cart operably coupled thereto, the agricultural vehicle comprising: a guidance system for controlling operation of the agricultural vehicle and the cart and comprising: at least one processor; and at least one non-transitory computer-readable storage medium storing instructions thereon that, when executed by the at least one processor, cause the guidance system, during an agricultural operation, to: capture image data of each transport vehicle of a plurality of transport vehicles via at least one sensor of the agricultural vehicle and compare a respective marker of each transport vehicle of the plurality of transport vehicles with a preselected marker stored within a database consecutively until a match between a given respective marker of a transport vehicle of the plurality of transport vehicles and the preselected marker is identified; identify the transport vehicle of the plurality of transport vehicles having the given respective marker that matches the preselected marker stored within the database as a target transport vehicle; and responsive to identifying the target transport vehicle, cause the agricultural vehicle to automatically align with the target transport vehicle..

Other technical features may be readily apparent to one skilled in the art from the following figures, descriptions, and claims.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE SEVERAL VIEWS OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 shows a schematic top view of an autonomous agricultural system and a plurality of transport vehicles according to one or more embodiments of the disclosure;
FIG. 2 shows a perspective view of an autonomous agricultural system according to one or more embodiments of the disclosure;
FIG. 3 shows a top view of an autonomous agricultural system according to one or more embodiments of the disclosure;
FIG. 4 shows a top view of a transport vehicle according to one or more embodiments of the disclosure;
FIG. 5 shows a top view of a transport vehicle according to one or more embodiments of the disclosure;
FIG. 6 shows a side view of a transport vehicle according to one or more embodiments of the disclosure;
FIG. 7 shows a schematic view of a guidance system according to one or more embodiments of the present disclosure;
FIG. 8 shows a flowchart of a method of controlling operation of an autonomous agricultural system according to one or more embodiments;
FIG. 9 shows a flowchart of a method of controlling operation of an autonomous agricultural system according to one or more embodiments;
FIG. 10 shows a flowchart of a method of controlling operation of an autonomous agricultural system according to one or more embodiments;
FIG. 11 shows a flowchart of a method of controlling operation of an autonomous agricultural system according to one or more embodiments;
FIG. 12 shows a flowchart of a method of controlling operation of an autonomous agricultural system according to one or more embodiments;
FIG. 13 shows a flowchart of a method of controlling operation of an autonomous agricultural system according to one or more embodiments;
FIG. 14 shows a flowchart of a method of controlling operation of an autonomous agricultural system according to one or more embodiments;
FIG. 15 is a schematic view of a central controller according to embodiments of the disclosure.

### DETAILED DESCRIPTION

Illustrations presented herein are not meant to be actual views of any particular agricultural vehicle, grain cart, sensors, guidance system, component, or system, but are merely idealized representations that are employed to describe embodiments of the disclosure. Additionally, elements common between figures may retain the same numerical designation for convenience and clarity.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, any relational term, such as "first," "second," "top," "bottom," "upper," "lower," "above," "beneath," "side," "outer," "inner," "front," "rear," "lateral," etc., is used for clarity and convenience in understanding the disclosure and accompanying drawings, and does not connote or depend on any specific preference or order, except where the context clearly indicates otherwise. For example, these terms may refer to an orientation of elements of an agricultural vehicle, a combine harvester, a cart, a transport vehicle, and/or an autonomous agricultural system as illustrated in the drawings. Additionally, these terms may refer to an orientation of elements of an agricultural vehicle, a combine harvester, a cart, and/or a transport vehicle when utilized in a conventional manners.

As used herein, the term "proximate," when utilized to describe positions of agricultural vehicle and/or the cart to another object (e.g., transport vehicle) means that the agricultural vehicle and/or the cart and the other object are within a given distance from each other. The distance may be at least partially dependent on a size (e.g., a lateral width in a horizontal direction orthogonal to a path of travel) of the agricultural vehicle and/or the cart. For example, the agricultural vehicle or the cart may be proximate the other object when the agricultural vehicle is within 20m, 10m, 5m, 2m, or 1m of the other object. In some embodiments, the distance may be a percentage (e.g., 25%) of the overall lateral width of the agricultural vehicle and/or cart. Additionally, in one or more embodiments, the distance may be based on an unloading system of the cart. For instance, the distance may include an appropriate distance between the cart and a transport vehicle for unloading process (e.g., unloading grain from the cart to the transport vehicle).

As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

As used herein, the term "and/or" includes any and all combinations of one or more of the associated listed items.

As used herein, the term "representation" may refer to a digital encoding of a physical object or phenomenon as captured by one or more sensors. The digital encoding may take various forms depending on the type of sensor data. As non-limiting examples 1) in image data, a representation may include pixels that represent visual characteristics of the object, 2) in video data, in addition to the representations of image data, a representation may include a sequence of images (frames) that capture the object's appearance and movement over time, 3) in LIDAR data, a representation may include a three-dimensional (3D) point cloud where each point represents a precise location on the object's surface, 4) in RADAR data, a representation may include a two-dimensional (2D) map or 3D map showing the object's location and movement based on radio wave reflections, 5) in thermal data, as representation may include a thermal image where different colors represent the object's temperature variations, and 6) in sound data, a representation may include a digital signal representing sound waves produced by or reflected from the object. Put another way, a representation, as used herein, includes a structured form of data that allows for the analysis, interpretation, and understanding of the physical object or phenomenon captured by the sensors.

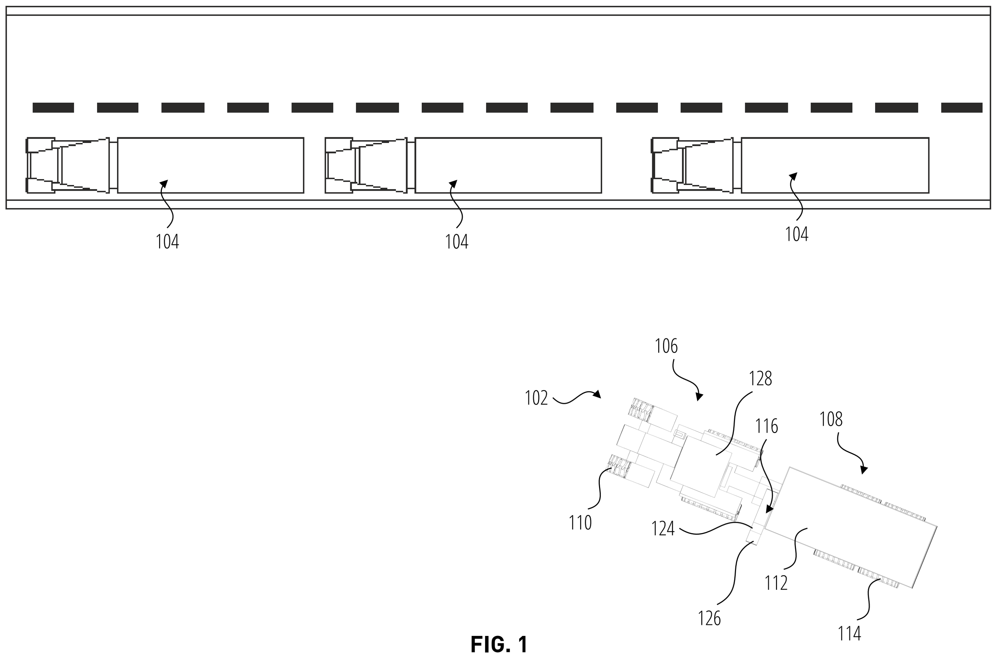

FIG. 1 is a simplified top view of an autonomous agricultural system 102 aligned with a transport vehicle 104 during an unloading operation according to one or more embodiments of the disclosure. The autonomous agricultural system 102 may include an agricultural vehicle 106 (e.g., a tractor) and a cart 108 (e.g., commodity trailer). The cart 108 may be coupled to a hitch of the agricultural vehicle 202 via one or more hitch attachments. The agricultural vehicle 202 may include a cabin 128 and may be supported by wheels 110 and/or tracks. The cart 108 may include a hopper 112 supported by wheels 114. The hopper 112 may define a container (e.g., bin) for receiving a commodity (e.g., grain) from a harvester vehicle (e.g., a combine harvester) and may include a tapered shape that facilitates a flow of the commodity towards an unloading system 116 of the cart 108. The unloading system 116 may be utilized to unload the commodity from the hopper 112 and into one or more of the plurality of transport vehicles 104. The unloading system 116 may include an auger system 124 including an auger 126 and a hydraulic motor.

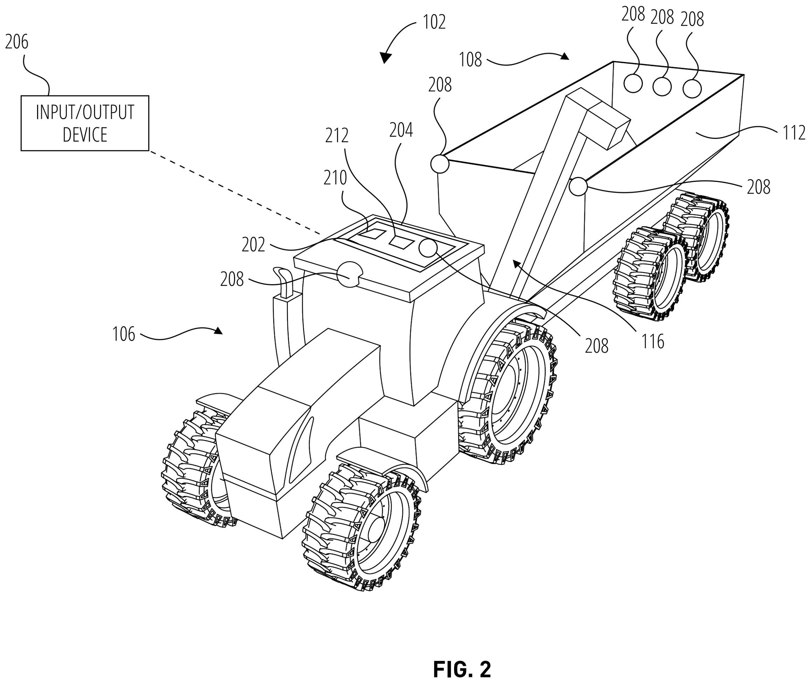

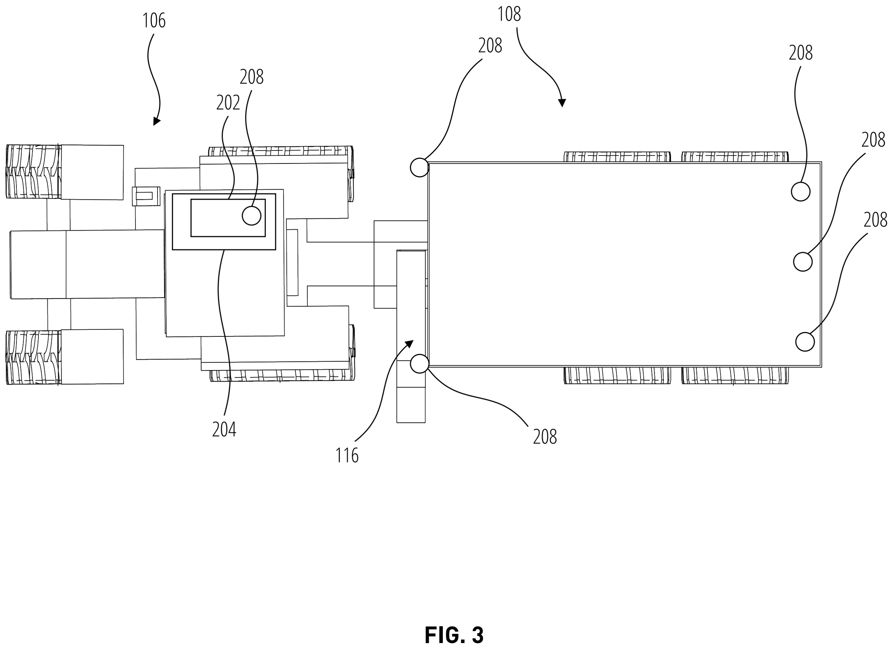

FIG. 2 is a simplified perspective view of the autonomous agricultural system 102 of FIG. 1 according to one or more embodiments of the disclosure. FIG. 3 is a simplified top view of the autonomous agricultural system 102 of FIG. 2. Referring to FIG. 1 through FIG. 3 together, as noted above, the autonomous agricultural system 102 may include the agricultural vehicle 106 and the cart 108, and the cart 108 may include the hopper 112 and the unloading system 116. In some embodiments, the agricultural vehicle 106 may include a tractor.

The agricultural vehicle 106 may further include a control system 204. The control system 204 may be configured to control one or more operations and devices of the agricultural vehicle 106 and/or the cart 108. In some embodiments, one or more parts of the control system 204 may be located in, for example, a cabin of the agricultural vehicle 106. In other embodiments, one or more parts of the control system 204 may be located on a roof of the cabin of the agricultural vehicle 106, in or proximate an engine compartment of the agricultural vehicle 106, or any other suitable portion of the agricultural vehicle 106. In one or more embodiments, one or more parts of the control system 204 may be located on or within the agricultural vehicle 106 and one or more other parts of the control system 204 may be located on or within the cart 108. In some embodiments, one or more parts of the control system 204 may be remote to the agricultural vehicle 106 and/or the cart 108.

The control system 204 may include a guidance system 202 and at least one input/output device 206 (e.g., a display). In some embodiments, the control system 204 may further include one or more sensors 208 mounted to one or more of the agricultural vehicle 106 and/or the cart 108. The one or more sensors 208 may be operably coupled to the guidance system 202 of the control system 204 and may be at least partially operated by the guidance system 202. Some of the sensors 208 may have a respective fields of view. A field of view may refer to an angular extent of an observable scene that a given sensor 208 can capture. As is described in further detail below, in some embodiments, the sensors 208 may be configured and/or controlled to capture sensor data related to the agricultural vehicle 106 and/or the cart 108 while the agricultural vehicle 106 and/or the cart 108 are performing an agricultural process (e.g., harvesting a commodity, unloading a commodity). Specifically, the sensors 208 may be controlled to capture data such as images of the agricultural vehicle 106 and/or the cart 108, videos of the agricultural vehicle 106 and/or the cart 108, 3D representations of the agricultural vehicle 106 and/or the cart 108, other visual depictions of the agricultural vehicle 106 and/or the cart 108, and information (e.g., any of the foregoing data) related to the environments surrounding or around the agricultural vehicle 106 and/or the cart 108.

Additionally, the sensors 208 may be configured and controlled to capture various types of sensor data related to the transport vehicles 104. Specifically, the sensors 208 may be controlled to capture data such as images of the transport vehicles 104, videos of the transport vehicles 104, 3D representations of the transport vehicles 104, other visual depictions of the transport vehicles 104, and information (e.g., any of the foregoing data) related to the environments surrounding or around the transport vehicles 104.

In some embodiments, the sensor data may include one or more of image data, video data, thermal data, LIDAR data, RADAR data, perception data, three-dimensional data, and/or ultrasonic data.

Furthermore, as is described in greater detail below, the guidance system 202 may utilize the sensor data captured by the sensors 208 to control operation of the agricultural vehicle 106 and/or the cart 108. In particular, the guidance system 202 may utilize the sensor data captured by the sensors 208 to align the agricultural vehicle 106 and/or the cart 108 relative to a combine harvester during a harvesting operation, identify and select a transport vehicle 104, align the agricultural vehicle 106 and/or the cart 108 relative to a selected transport vehicle 104, align the agricultural vehicle 106 and/or the cart 108 with a selected transport vehicle, control operation of the unloading system 116 of the cart 108, and/or unload a commodity from the cart 108 to the selected transport vehicle 104.

In some embodiments, the sensors 208 may include one or more of a light detection and ranging (LIDAR) camera, an RGB camera, a stereo camera, ultrasonic sensors, or a radio detection and ranging (RADAR) device. In further embodiments, one or more of the sensors 208 may include a thermal camera. For example, one or more of the sensors 208 may include a long-wave infrared (LWIR) camera. In additional embodiments, one or more of the sensors 208 may include one or more of a mid-wave infrared (MWIR) camera, a short-wave infrared (SWIR) camera, a near infrared (NIR) camera, an ultraviolet camera (UV camera), or a visible light camera with an infrared filter. I

In one or more embodiments, one or more of the sensors 208 may include a polarized camera (e.g., a polarized NIR, RGB, or SWIR camera). In particular, one or more of the sensors 208 may include one or more polarization filters that separate incoming light into polarized components. Furthermore, the polarized camera may include micro-polarizers integrated directly on the image sensor portion of the polarized camera that filter the incoming light for each detected pixel based on the pixel's polarized state (e.g., 0°, 45°, 90°, 135°). In one or more embodiments, the polarized camera may be configured to capture multiple images simultaneously with each captured image correlated to a different polarization state. Moreover, one or more algorithms may be utilized to process the images captured at different polarizations and generate relatively detailed images that can highlight features not typically visible in standard intensity-based imaging.

Furthermore, the sensors 208 may be configured to capture image data including one or more of relatively high resolution color images/video, relatively high resolution infrared images/video, or light detection and ranging data. In some embodiments, the sensors 208 may be configured to capture image data at multiple focal lengths. In some embodiments, the sensors 208 may be configured to combine multiple exposures into a single high-resolution image/video. In some embodiments, each of the sensors 208 may include multiple image sensors (e.g., cameras) with fields of view facing different directions. For instance, a first image sensor may generally face forward (e.g., in a direction of travel), and a second image sensor may generally face downward toward a soil surface in a direction orthongal to a direction of travel of the agricultural vehicle 106.

As noted above, in some embodiments, the sensors 208 may include a radio detection and ranging (RADAR) device. Furthermore, the RADAR device may include a synthetic aperture radar (SAR), or an inverse synthetic aperture radar (ISAR) configured to facilitate receiving relatively higher resolution data compared to conventional radars. The RADAR device may be configured to scan the radar signal across a range of angles to capture a 2D representation of the environment, each pixel representing the radar reflectivity at a specific distance and angle. In other embodiments, the RADAR device includes a 3D radar configured to provide range (e.g., distance, depth), velocity (also referred to as "Doppler velocity"), azimuth angle, and elevational angle. The RADAR device may be configured to provide a 3D radar point cloud to the guidance system 202.

The radar data may include one or more of analog-to-digital (ADC) signals, a radar tensor (e.g., a range-azimuth-doppler tensor), and a radar point cloud. In some embodiments, the output radar data includes a point cloud, such as a 2D radar point cloud or a 3D radar point cloud (also, simply referred to herein as a "3D point cloud"). In some embodiments, the output radar data includes a 3D radar point cloud.

Referring still to FIG. 1 through FIG. 3 together, in some embodiments, the guidance system 202 may include a Global Navigation Satellite System (GNSS) receiver 210 ("GNSS receiver 210") configured to determine precise geographical location, velocity, and time by processing signals received from multiple satellites within global constellations such as GPS, GLONASS, Galileo, and BeiDou. In particular, during operation, the GNSS receiver 210 may at least substantially continuously acquire and track satellite signals and calculate time delays between signal transmission and reception to compute pseudoranges, which are then used to determine a position of the GNSS receiver 210 through trilateration. For example, the GNSS receiver 210 may utilize various algorithms and signal processing techniques to correct for various errors and ensure a relatively high accuracy. The GNSS receiver 210 may operate in conventional manners and may provide GNSS data to the guidance system 202.

The control system 204 and/or the guidance system 202 may include a wireless transceiver 212 for communicating via one or more wireless networks, such as, for example, WI-FI, Bluetooth, cellular, Li-Fi, Zigbee, Z-wave, and radio waves. In some embodiments, the wireless transceiver 212 may include a multi-protocol wireless receiver. The guidance system 202 may communicate with the transport vehicles, remote devices, and/or the input/output device 206 via the wireless transceiver 212.

In some embodiments, as noted above, the input/output device 206 may be remote from the guidance system 202 and may allow an operator of the agricultural vehicle 106 to provide input to, receive output from, and otherwise transfer data to and receive data from guidance system 202 of the control system 204. In some embodiments, the input/output device 206 may be within the cabin of the agricultural vehicle 106. In other embodiments, the input/output device 206 may be remote from agricultural vehicle 106. The input/output device 206 may include a mouse, a keypad or a keyboard, a joystick, a touch screen, a camera, an optical scanner, network interface, modem, other known I/O devices or a combination of such I/O interfaces. The input/output device 206 may include one or more devices for presenting output to an operator, including, but not limited to, a graphics engine, a display (e.g., a display screen), one or more output drivers (e.g., display drivers), one or more audio speakers, and one or more audio drivers. In certain embodiments, the input/output device 206 is configured to provide graphical data to a display for presentation to an operator. The graphical data may be representative of one or more graphical user interfaces and/or any other graphical content as may serve a particular implementation. As is described in greater detail below, the control system 204 and the input/output device 206 may be utilized to display data (e.g., images and/or video data) received from the one or more guidance systems 202 and provide one or more recommendations of adjusting operation of the agricultural vehicle 106 and/or the cart 108 and/or video data to assist an operator in navigating the agricultural vehicle 106 and/or the cart 108.

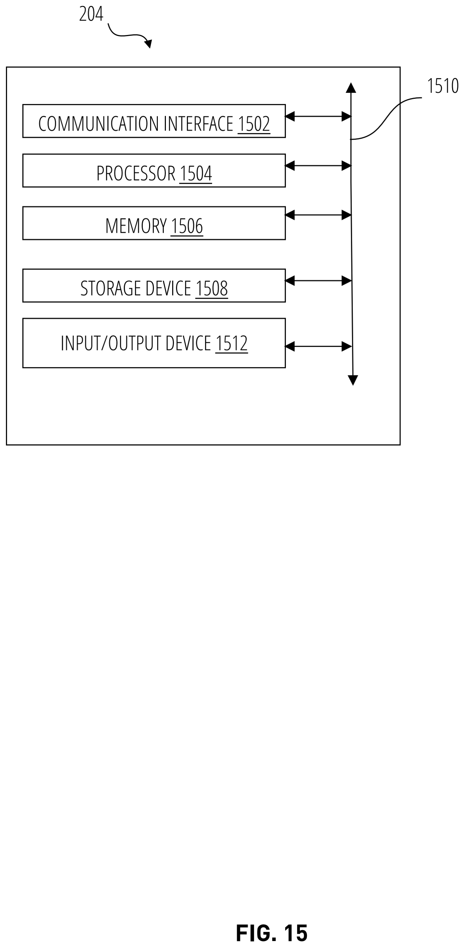

In some embodiments, the input/output device 206 may be part of a client device. The client device may include various types of computing devices with which operators can interact. For example, the client device may be a mobile device (e.g., a cell phone, a smartphone, a PDA, a tablet, a laptop, a watch, a wearable device, a smart speaker, etc.). In some embodiments, however, the client device may be a non-mobile device (e.g., a desktop or server). Additional details with respect to the client device are discussed below with respect to FIG. 15. Likewise, the control system 204 may include various types of computing devices. The control system 204 is described in greater detail below in regard to FIG. 15.

Referring still to FIG. 1 through FIG. 3, while the guidance system 202 is described as being part of the control system 204 of the agricultural vehicle 106, the disclosure is not so limited. Rather, the guidance system 202 may be part of (e.g., operated on) another device in communication with the control system 204 of the agricultural vehicle 106. In further embodiments, the guidance system 202 may be part of or operated on one or more servers or remote devices in communication with the control system 204. Additionally, while FIG. 2 through FIG. 3 show the guidance system 202 as being part of and/or utilized in relation to operation of an agricultural vehicle 106 and a cart 108, the disclosure is not so limited. Rather, the guidance system 202 may be part of and/or utilized in relation to operation of any agriculture vehicle (e.g., a combine) and/or implement.

As is described in greater detail below, the guidance system 202 may enable the autonomous agricultural system 102 to detect and select an appropriate transport vehicle 104 into which the autonomous agricultural system 102 may unload a commodity (e.g., grain) subsequent to receiving the commodity from a harvester (e.g., combine harvester). For example, responsive to approaching an unloading gate and/or unloading area of an agricultural field (e.g., a designated area or structure where harvested crops are intended to be transferred from field equipment, like combines or grain carts, to transport vehicles or storage facilities), the control system 204 of the agricultural vehicle 106 may cause the sensors 208 of the control system 204 to detect vehicles (e.g., transport vehicles 104) within a given vicinity, select a transport vehicle 104, guide the agricultural vehicle 106 and cart 108 to the selected transport vehicle 104, and align the agricultural vehicle 106 and cart 108 with the transport vehicle 104.

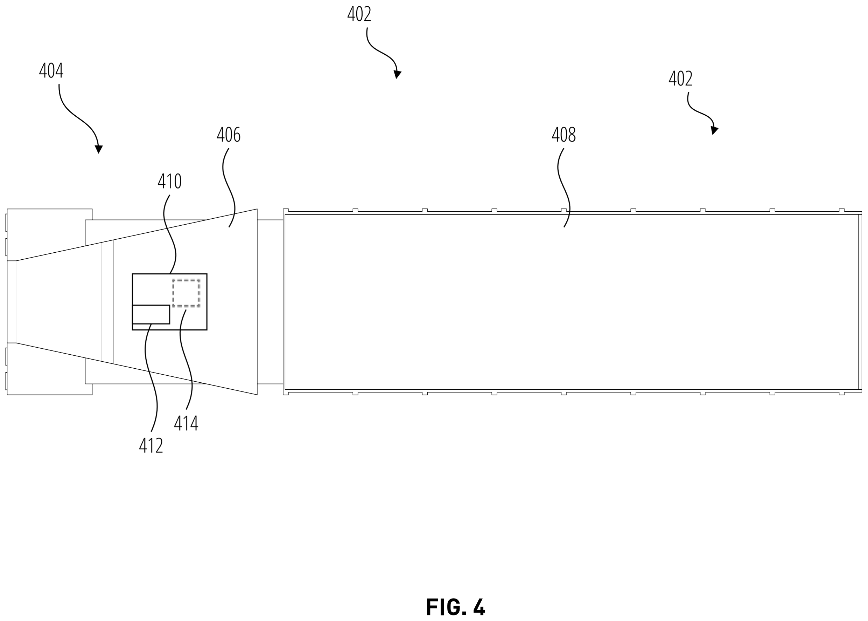

FIG. 4 is a simplified top view of a transport vehicle 402 (e.g., transport vehicle 104) according to one or more embodiments of the disclosure. The transport vehicle 402 may include a truck portion 404 having a cabin 406 and a trailer 408 coupled to the truck portion 404. Furthermore, the transport vehicle 402 may include a computing device 410 associated with (e.g., configured to communicate with) the guidance system 202 (FIG. 2) of the autonomous agricultural system 102 (FIG. 2).

The computing device 410 may include any suitable computing device with which operators can interact. For example, the computing device 410 may be a mobile device (e.g., a cell phone, a smartphone, a PDA, a tablet, a laptop, a watch, a wearable device, a smart speaker, etc.). In some embodiments, however, the computing device 410 may be a non-mobile device (e.g., a desktop or server). Additional details with respect to the computing device 410 are discussed below with respect to FIG. 15.

Regardless, the computing device 410 may include a wireless transceiver 412 for communicating via one or more wireless networks, such as, for example, WI-FI, Bluetooth, cellular, Li-Fi, Zigbee, Z-wave, and radio waves. In some embodiments, the wireless transceiver 412 may include a multi-protocol wireless receiver. The computing device 410 may communicate with the guidance system 202 (FIG. 2) of the autonomous agricultural system 102 via the wireless transceiver 412.

As is discussed in greater detail below, in some embodiments, the computing device 410 may be configured to communicate a GNSS location of the transport vehicle 402 (e.g., a respective transport vehicle) via the wireless transceiver 412. In particular, the computing device 410 may be configured to communicate a GNSS location of the transport vehicle 402 to the guidance system 202 of the autonomous agricultural system 102. The GNSS location of the transport vehicle 402 can then be utilized by the autonomous agricultural system 102 to select an appropriate transport vehicle 402, and ultimately, guide the autonomous agricultural system 102 to the appropriate transport vehicle 402. In some embodiments, the computing device 410 may include or be operably coupled to a respective GNSS receiver 414. The GNSS receiver 414 may include any of the GNSS receivers described herein.

In additional embodiments, the computing device 410 may be configured to communicate (e.g., output) directional radio signals (e.g., ultra-high frequency radio signals) via the wireless transceiver 412. The guidance system 202 can receive the directional radio signals and can then use the received directional radio signals to select an appropriate transport vehicle 402, and ultimately, guide the autonomous agricultural system 102 to the appropriate transport vehicle 402.

In one or more embodiments, the computing device 410 may initiate communication (e.g., outputs and/or inputs) via the wireless transceiver 412 responsive to the autonomous agricultural system 102 (FIG. 2) approaching an unloading gate and/or unloading area of an agricultural field (e.g., a designated area or structure where harvested crops are intended to be transferred from field equipment, such as, combines or grain carts, to transport vehicles or storage facilities). For example, responsive to the autonomous agricultural system 102 crossing a geofence and/or virtual boundary, the computing device 410 may initiate communication (e.g., transmission and/or reception of communication) via the wireless transceiver 412. In particular, the computing device 410 may monitor or be in communication with a device that monitors a geofence and/or virtual boundary.

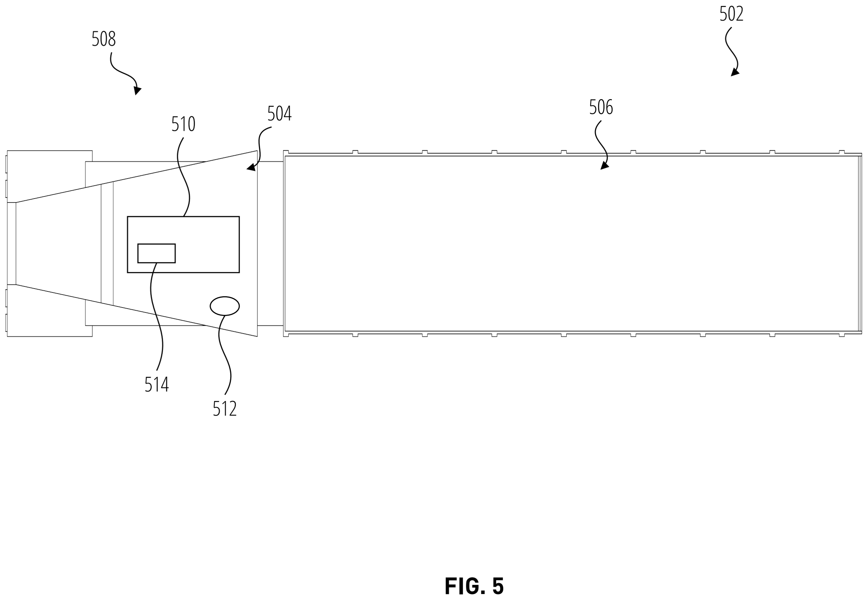

FIG. 5 is a simplified top view of a transport vehicle 502 according to one or more embodiments of the disclosure. The transport vehicle 502 may include a truck portion 404 having a cabin 504 and a trailer 506 coupled to the truck portion 508. Furthermore, the transport vehicle 502 may include a computing device 510 associated with (e.g., configured to communicate with) a guidance system (e.g., guidance system 202) of an autonomous agricultural system (e.g., autonomous agricultural system 102) and at least one light emitting device 512.

The computing device 510 may include any suitable computing device with which operators can interact. For example, the computing device 510 may be a mobile device (e.g., a cell phone, a smartphone, a PDA, a tablet, a laptop, a watch, a wearable device, a smart speaker, etc.). In some embodiments, however, the computing device 510 may be a non-mobile device (e.g., a desktop or server). Additional details with respect to the computing device 510 are discussed below with respect to FIG. 15.

Regardless, the computing device 510 may include a wireless transceiver 514 for communicating via one or more wireless networks, such as, for example, WI-FI, Bluetooth, cellular, Li-Fi, Zigbee, Z-wave, and radio waves. In some embodiments, the wireless transceiver 514 may include a multi-protocol wireless receiver. The computing device 510 may communicate with a guidance system (e.g., guidance system 202) of an autonomous agricultural system (e.g., autonomous agricultural system 102) via the wireless transceiver 514. The computing device 510 may communicate with a guidance system of an autonomous agricultural system via any of the manners described above in regard to FIG. 1 through FIG. 4.

The at least one light emitting device 512 may be operably coupled to the computing device 510, and the computing device 510 may be configured to control operation of the at least one light emitting device 512. The at least one light emitting device 512 may include a plurality of light emitting devices 512. Furthermore, the at least one light emitting device 512 may be configured to emit electromagnetic radiation that may be detected by sensors (e.g., sensors 208) of a guidance system (e.g., guidance system 202) of an autonomous agricultural system (e.g., autonomous agricultural system 102). For example, the at least one light emitting device 512 may include one or more light-emitting-diodes (LEDs) for emitting light. In some embodiments, the at least one light emitting device 512 may emit one or more of visible light, short-wave infrared light (SWIR light), near infrared light (NIR light), infrared (IR) light, or ultra-violet (UV) light. In one or more embodiments, the at least one light emitting device 512 may be configured to emit light within a specific (e.g., selected) spectral band of the electromagnetic spectrum. In some embodiments, the at least one light emitting device 512 may include a plurality of light emitting devices 512 with at least one of the plurality of light emitting devices 512 being configured to emit a first type of electromagnetic radiation (e.g., UV light), and at least one other of the plurality of light emitting devices 512 being configured to emit a second type of electromagnetic radiation (e.g., NIR light).

In some embodiments, the computing device 510 may be configured to cause the at least one light emitting device 512 to emit light in one or more sequences. For instance, the computing device 510 may be configured to cause the at least one light emitting device 512 to emit light in sequential bursts or flashes. In additional embodiments including a plurality of light emitting devices 512, the computing device 510 may be configured to cause multiple light emitting devices 512 to illuminate sequentially, one after another, or simultaneously.

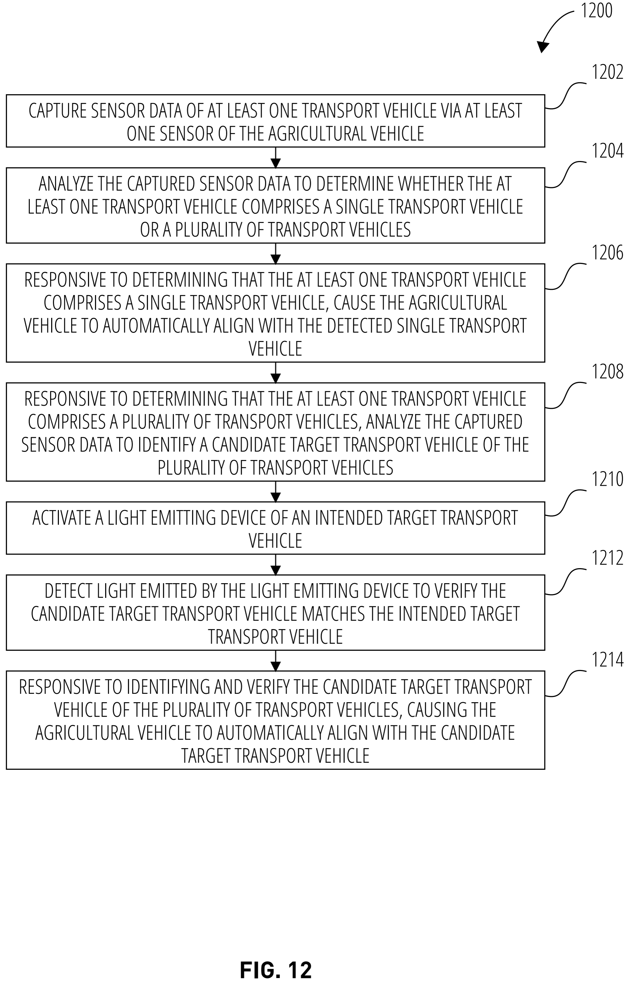

As is discussed in greater detail below in regard to FIG. 12, the light emitted by the at least one light emitting device 512 may be detected by sensors of a guidance system of an autonomous agricultural system and may be utilized by the autonomous agricultural system to select an appropriate transport vehicle, and ultimately, guide the autonomous agricultural system to the appropriate transport vehicle.

In one or more embodiments, the transport vehicle 502 may further include any of the elements and/or perform any of the functions (e.g., communicate GNSS locations or output directional radio signals) of the transport vehicle 402 described above in regard to FIG. 4.

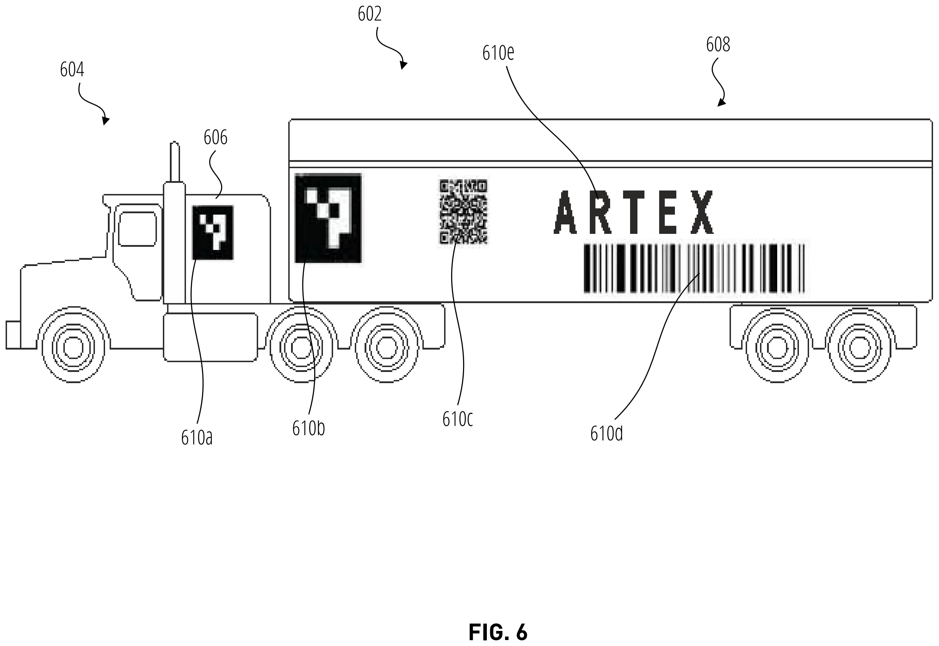

FIG. 6 is a simplified lateral-side view of a transport vehicle 602 according to one or more embodiments of the disclosure. The transport vehicle 602 may include a truck portion 604 having a cabin 606 and a trailer 608 coupled to the truck portion 604.

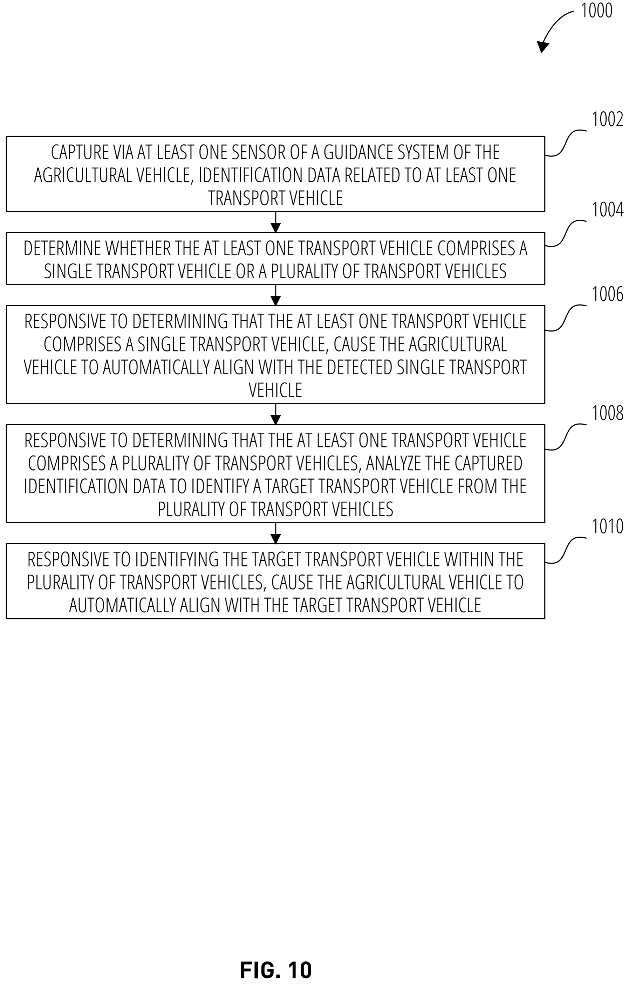

As depicted in FIG. 6, the transport vehicle 602 may include one or more markers 610a, 610b, 610c, 610d, 610e (referred herein collectively as "markers 610a") formed on sidewalls (e.g., lateral sidewalls) of one or more of the truck portion 604 or the trailer 608. The markers 610a may include one or more of a text marker, a quick response (QR) code, a barcode, an aztec code, a data matrix code, a PDF417 code, a micro QR code, or an iQR code. In some embodiments, the markers 610a may store and communicate unique identification information about the respective transport vehicle 602, such as an ID number, owner details, or other relevant data. In some embodiments, information about the type of commodity to be unloaded and the designated transport vehicle 104 may be pre-logged in a memory of the autonomous agricultural system 102 or dynamically received as the one or more markers 610a are scanned. As is discussed in greater detail below in regard to FIG. 10, when scanned (e.g., detected and/or viewed) by sensors (e.g., sensors 208) of an autonomous agricultural system (e.g., autonomous agricultural system 102), the markers 610a may facilitate the rapid and accurate identification of the transport vehicle 602.

In one or more embodiments, the transport vehicle 602 may further include any of the elements and/or perform any of the functions (e.g., communicate GNSS locations or output directional radio signals) of the transport vehicle 402 described above in regard to FIG. 4 and/or any of the any of the functions (e.g., emit light via a light emitting device 512) of the transport vehicle 502 described above in regard to FIG. 5.

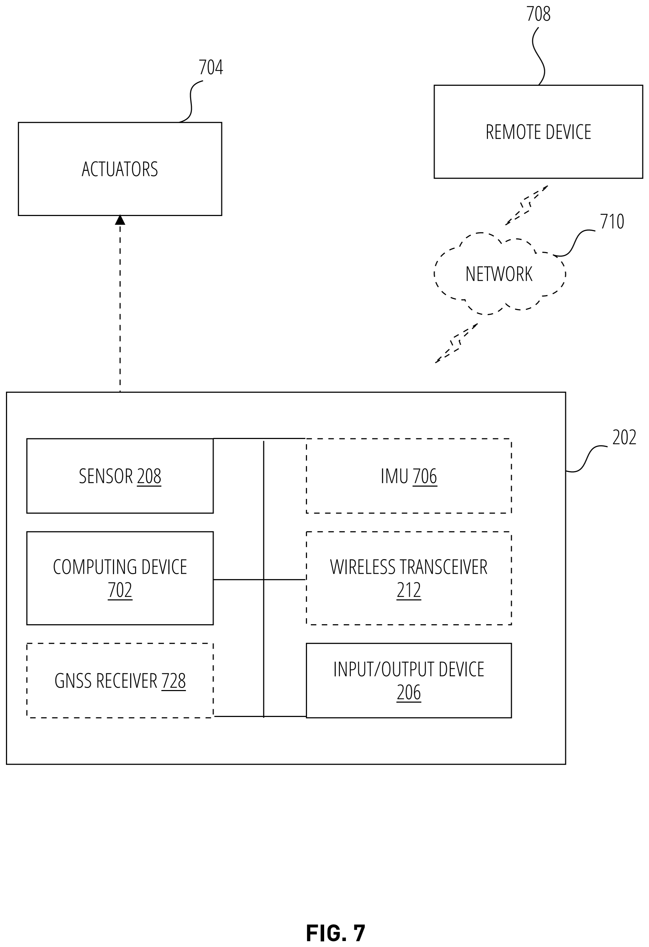

FIG. 7 is a schematic view of a guidance system 202 according to one or more embodiments of the disclosure. In one or more embodiments, the guidance system 202 may include a computing device 702, an input/output device 206, and one or more sensors sensor 208. The one or more sensors 208 and the input/output device 206 may be in operable communication with the computing device 702 and may be configured to provide data to and/or receive data and/or signals from the computing device 702. In additional embodiments, the one or more sensors 208 and/or the input/output device 206 may be separate and distinct from the guidance system 202 (e.g., as partially depicted in FIG. 1) and may be in operable communication with the guidance system 202. The computing device 702 may optionally be further operably coupled to actuators 704 of an agricultural vehicle (e.g., agricultural vehicle 106) and/or a cart (e.g., cart 108). The actuators 704 may include hydraulic valves, power switches, and/or any other known actuators for controlling operation of agricultural vehicles and carts (e.g., grain carts).

The one or more sensors 208 may include any of the sensors 208 described above in regard to FIG. 1 through FIG. 3 or any combination thereof.

As is described in greater detail below, the computing device 702 may include a communication interface, a processor, a memory, a storage device, the input/output device 206, and a bus. The computing device 702 is described in greater detail in regard to FIG. 15. In input/output device 206 may include any of the input/output devices 206 described above. In some embodiments, the guidance system 202 may not be coupled to actuators 704 of an agricultural vehicle and/or a cart.

Referring still to FIG. 7, in some embodiments, the guidance system 202 may optionally include an inertial measurement unit (IMU 706). The IMU 706 may be operably coupled to the computing device 702 and may provide measured and/or calculated data to the computing device 702. The IMU 706 may include a device that is configured to measure and output specific force, attitude, velocity, angular rate, and/or an orientation of a moving object (e.g., an agricultural vehicle) relative to a reference frame. The IMU 706 may combine accelerometers (for linear acceleration) and gyroscopes (for rotational rate) to determine the object's motion. In one or more embodiments, the IMU 706 may also include one or more magnetometers for heading reference.

Additionally, as noted above, the guidance system 202 may optionally include a GNSS receiver 728. The GNSS receiver 728 may be configured to determine precise geographical location, velocity, and time by processing signals received from multiple satellites within global constellations such as GPS, GLONASS, Galileo, and BeiDou. In particular, during operation, the GNSS receiver 728 may at least substantially continuously acquire and track satellite signals and calculate time delays between signal transmission and reception to compute pseudoranges, which are then used to determine a position of the GNSS receiver 728 through trilateration. For example, the GNSS receiver 728 may utilize various algorithms and signal processing techniques to correct for various errors and ensure a relatively high accuracy. The GNSS receiver 728 may operate in conventional manners and may provide GNSS data to the guidance system 202.

Furthermore, as noted above, the guidance system 202 may optionally include a wireless transceiver 212 for communicating via one or more wireless networks, such as, for example, WI-FI, Bluetooth, cellular, Li-Fi, Zigbee, Z-wave, and radio waves. In some embodiments, the wireless transceiver 212 may include a multi-protocol wireless receiver. The guidance system 202 may communicate with the transport vehicles, remote devices, and/or the input/output device 206 via the wireless transceiver 212.

As mentioned above, the input/output device 206 may be remote from the guidance system 202 and may allow an operator of the agricultural vehicle 106 to provide input to, receive output from, and otherwise transfer data to and receive data from guidance system 202 of the control system 204. In some embodiments, the input/output device 206 may be within the cabin of the agricultural vehicle 106. In other embodiments, the input/output device 206 may be remote from agricultural vehicle 106. The input/output device 206 may include a mouse, a keypad or a keyboard, a joystick, a touch screen, a camera, an optical scanner, network interface, modem, other known I/O devices or a combination of such I/O interfaces. The input/output device 206 may include one or more devices for presenting output to an operator, including, but not limited to, a graphics engine, a display (e.g., a display screen), one or more output drivers (e.g., display drivers), one or more audio speakers, and one or more audio drivers. In certain embodiments, the input/output device 206 is configured to provide graphical data to a display for presentation to an operator. The graphical data may be representative of one or more graphical user interfaces and/or any other graphical content as may serve a particular implementation. As is described in greater detail below, the control system 204 and the input/output device 206 may be utilized to display data (e.g., images and/or video data) received from the one or more guidance systems 202 and provide one or more recommendations of adjusting operation of the agricultural vehicle 106 and/or the cart 108 and/or video data to assist an operator in navigating the agricultural vehicle 106 and/or the cart 108.

In some embodiments, the input/output device 206 may be part of a client device. The client device may include various types of computing devices with which operators can interact. For example, the client device may be a mobile device (e.g., a cell phone, a smartphone, a PDA, a tablet, a laptop, a watch, a wearable device, a smart speaker, etc.). In some embodiments, however, the client device may be a non-mobile device (e.g., a desktop or server). Additional details with respect to the client device are discussed below with respect to FIG. 15. Likewise, the control system 204 may include various types of computing devices. The control system 204 is described in greater detail below in regard to FIG. 15.

In some embodiments, the guidance system 202 may be in communication with (e.g., be operably coupled) to one or more remote devices 708. The one or more remote devices 708 can represent various types of computing devices with which users can interact. For example, the one or more remote devices 708 can be a mobile device (e.g., a cell phone, a smartphone, a PDA, a tablet, a laptop, a watch, a wearable device, etc.). In some embodiments, however, the one or more remote devices 708 can be a non-mobile device (e.g., a desktop or server). In some embodiments, the one or more remote devices 708 include one or more servers (e.g., computer or software systems) configured to provide services, data, or resources to other computers over a network. Furthermore, in some embodiments, the one or more remote devices 708 and the input/output device 206 may be a same device. Furthermore, the one or more remote devices 708 may perform and/or assist in performing any of the actions and processes attributed to the guidance system 202.

The guidance system 202 may communicate with the one or more remote devices 708 via a network 710. The network 710 may include one or more networks, such as the Internet, and can use one or more communications platforms or technologies suitable for transmitting data and/or communication signals.

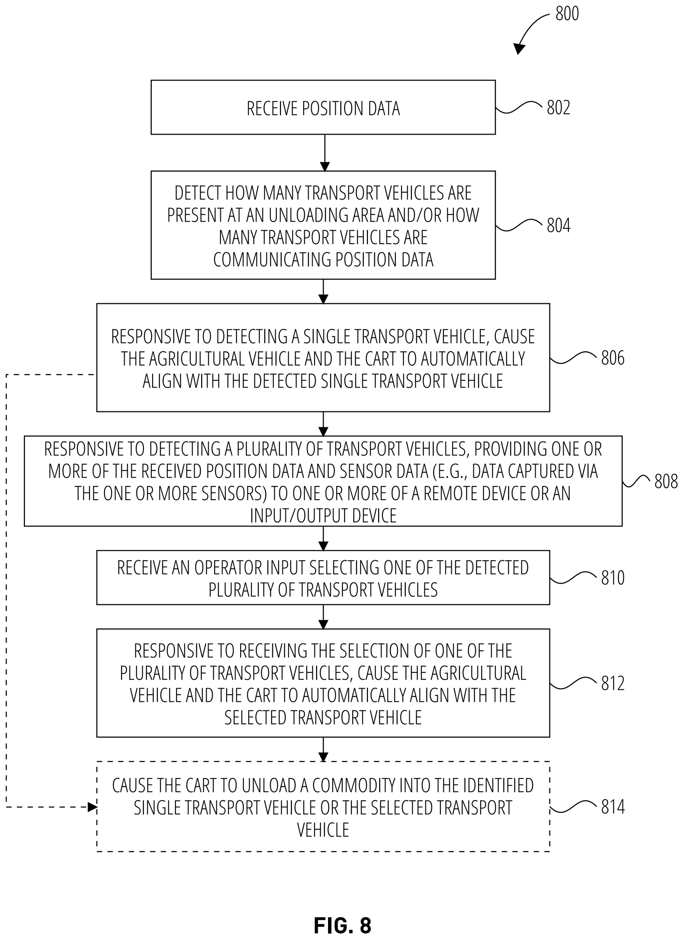

FIG. 8 shows a flowchart of a method 800 of controlling operation an agricultural vehicle (e.g., agricultural vehicle 106) (e.g., a tractor) and/or a cart (e.g., cart 108) and aligning the agricultural vehicle and/or the cart within a transport vehicle during an agricultural process (e.g., a harvesting operation, unloading operation, etc.) according to one or more embodiments of the disclosure. In one or more embodiments, a guidance system (e.g., guidance systems 202) may perform one or more acts of the method 800. For purposes of description of FIG. 8, the guidance system 202 is described as performing one or more acts of the method 800; however, it is understood that any of the guidance systems (e.g., guidance systems 202) described herein may perform one or more acts of the method 800. Furthermore, for purposes of the description of FIG. 8, a transport vehicle 104 or transport vehicles 104 are referenced; however, it is understood that the method 800 can be utilized with any of the transport vehicles (e.g., transport vehicle 104, 502, 602) described herein. Additionally, in some embodiments, one or more acts of the method 800 may be performed by the control system 204 of the agricultural vehicle 106 and/or one or more remote devices (e.g., remote devices 712).

In some embodiments, the method 800 may include receiving position data, as shown in act 802 of FIG. 8. For example, the guidance system 202 of the control system 204 of the agricultural vehicle 106 may receive position data. In some embodiments, the position data may be received from the computing devices 410 of one or more transport vehicles 104. In some embodiments, the position data is received wirelessly through on or more wireless communication protocols. In one or more embodiments, the position data may be received by way of a wireless transceiver (e.g., wireless transceiver 718) of the guidance system 202.

In one or more embodiments, the position data may include GNSS data. For example, the position data may include coordinate data, altitude data, velocity data, and time data. Each instance (e.g., each communication) of received GNSS data may represent and provide position data for a respective transport vehicle 104.

Receiving the position data may be triggered by the autonomous agricultural system 102 (FIG. 2) approaching an unloading gate and/or unloading area of an agricultural field (e.g., a designated area or structure where harvested crops are intended to be transferred from field equipment, such as, combines or grain carts, to transport vehicles or storage facilities). For example, responsive to the autonomous agricultural system 102 crossing a geofence and/or virtual boundary, the guidance system 202 of the autonomous agricultural system 102 may seek communication from the computing devices 410 of the one or more transport vehicles 104, and/or the computing devices 410 of the one or more transport vehicle 104 may initiate communication (e.g., transmission and/or reception of communication) via the wireless transceiver 412 of the computing device 410. In some embodiments, the computing devices 410 of the transport vehicles 104 may monitor or be in communication with a device that monitors a geofence and/or virtual boundary of an agricultural field. In additional embodiments, the guidance system 202 of the autonomous agricultural system 102 may monitor or be in communication with a device that monitors a geofence and/or virtual boundary and may ping (e.g., output a communication to) the transport vehicles 104 responsive to crossing the geofence and/or virtual boundary.

The method 800 may include detecting how many transport vehicles 104 are present at an unloading area and/or how many transport vehicles 104 are communicating position data, as shown in act 804 of FIG. 8. For example, the guidance system 202 of the control system 204 of the agricultural vehicle 106 may detect how many transport vehicles 104 are present at an unloading area and/or how many transport vehicles 104 are communicating position data. In some embodiments, the guidance system 202 may determine how many instances (i.e., communications) of position data were received or from how many sources position data was received to detect (e.g., determine) how many transport vehicles 104 are present at an unloading area and/or how many transport vehicles 104 are communicating position data. For example, in response to receiving a communication of position data from a single source, the method 800 may include determining and detecting that a single transport vehicle 104 is present. In response to receiving multiple communications of different position data from multiple sources, the method 800 may include determining and detecting that multiple transport vehicles 104 are present.

In some embodiments, the received position data is cross-referenced with other data acquired by the guidance system 202. For example, responsive to receiving position data from a transport vehicle 104, the position data may be correlated (i.e., matched) to a transport vehicle 104 detected via the one or more sensors 208 of the agricultural vehicle 106. For example, as is described in greater detail below, the one or more sensors 208 may capture sensor data (e.g., image data) of the one or more transport vehicles 104, and the guidance system 202 may detect (e.g., identify) the one or more transport vehicles 104 in the sensor data and correlate received position data to the one or more transport vehicles 104. The detection of the transport vehicles 104 via the one or more sensors 208 is described in greater detail below, and the detection can be achieved via any of the manners described herein.

Referring still to FIG. 8, responsive to detecting a single transport vehicle 104, the method 800 may include causing the agricultural vehicle 106 and the cart 108 to automatically align with the detected (e.g., identified) single transport vehicle 104, as shown in act 806 of FIG. 8. For example, the guidance system 202 of the control system 204 of the agricultural vehicle 106 may control one or more actuators 710 and one or more operations (e.g., steering and propulsion) of the agricultural vehicle 106 and/or cart 108 to cause the agricultural vehicle 106 and/or cart 108 to align with the detected (e.g., identified) single transport vehicle 104.

Causing the agricultural vehicle 106 and the cart 108 to automatically align with the identified single transport vehicle 104 may include utilizing the position data received from the transport vehicle 104 (e.g., a GNSS position of the transport vehicle 104) and position data related to the agricultural vehicle 106 and/or cart 108 (e.g., a GNSS position of the agricultural vehicle 106 and/or cart 108). In particular, the guidance system 202 may utilize the position data received from the transport vehicle 104, position data related to the agricultural vehicle 106 and/or cart 108 received and acquired via the GNSS receiver 210 of the agricultural vehicle 106, and the GNSS receiver 210 of the guidance system 202 to determine a starting position (e.g., present position) of the agricultural vehicle 106 and/or cart 108 relative to an aligned position of agricultural vehicle 106 and/or cart 108 (e.g., an aligned position and orientation of the agricultural vehicle 106 and/or cart 108 relative to the transport vehicle 104).

As used herein, an "aligned position" may refer to a position and orientation of the agricultural vehicle 106 and/or cart 108 relative to a position of the transport vehicle 104 indicated in the received position data from the transport vehicle 104 or a position of the transport vehicle 104 determined by way of the one or more sensors 208 and captured sensor data that aligns the cart 108 for unloading a commodity into the trailer 408 of the transport vehicle 104. Put another way, the aligned position may represent a location and orientation of the agricultural vehicle 106 and/or cart 108 relative to the transport vehicle 104 that positions and orients the cart 108 such that the cart 108 can effectively and appropriately unload a commodity into the trailer 408 of the transport vehicle 104. For instance, the aligned position may represent a position and orientation of the agricultural vehicle 106 and/or cart 108 relative to the transport vehicle 104 that positions the cart 108 an appropriate distance from and orients the cart 108 such that the unloading system 116 (FIG. 1) (e.g., auger and hydraulic motor) can correctly unload the commodity into the trailer 408 of the transport vehicle 104. In some embodiments, the aligned position is determined (e.g., calculated) based on the received position data from the transport vehicle 104 (e.g., a GNSS position of the transport vehicle 104).

Causing the agricultural vehicle 106 and the cart 108 to automatically align with the detected (e.g., identified) single transport vehicle 104 may further determining a path to the aligned position from a current position of the agricultural vehicle 106 and/or cart 108. For example, the guidance system 202 may determine the path from the current position of the agricultural vehicle 106 and/or cart 108 to the aligned position. In some embodiments, the guidance system 202 may utilize one or more of high precision maps and real-time environment analysis to determine a path from the current position of the agricultural vehicle 106 and/or cart 108 to the aligned position. In one or more embodiments, the guidance system 202 may further utilize data captured by the one or more sensors 208 to determine the path from the position of the agricultural vehicle 106 and/or cart 108 to the aligned position and to identify obstacles in the determined path Additionally, the guidance system 202 may perform dynamic path adjustments using the real-time data to adjust the determined path to avoid the identified obstacles. Furthermore, the guidance system 202 may utilize one more path planning algorithms and machine learning techniques to determine the path from the current position of the agricultural vehicle 106 and/or cart 108 to the aligned position.

As noted above, in some embodiments, the guidance system 202 may further utilize data captured by the one or more sensors 208 to identify obstacles in the determined path. Furthermore, as mentioned above, the one or more sensors 208 may include one or more of a light detection and ranging (LIDAR) camera, an RGB camera, a stereo camera, ultrasonic sensors, or a radio detection and ranging (RADAR) device. In further embodiments, one or more of the sensors 208 may include a thermal camera. For example, the image sensor 104 may include a long-wave infrared (LWIR) camera. In additional embodiments, one or more of the sensors 208 may include one or more of a mid-wave infrared (MWIR) camera, a short-wave infrared (SWIR) camera, a near infrared (NIR) camera, an ultraviolet camera (UV camera), or a visible light camera with an infrared filter.

In one or more embodiments, one or more of the sensors 208 may include a polarized camera (e.g., a polarized NIR, RGB, or SWIR camera). In particular, one or more of the sensors 208 may include one or more polarization filters that separate incoming light into polarized components. Furthermore, the polarized camera may include micro-polarizers integrated directly on the image sensor portion of the polarized camera that filter the incoming light for each detected pixel based on the pixel's polarized state (e.g., 0°, 45°, 90°, 135°). In one or more embodiments, the polarized camera may be configured to capture multiple images simultaneously with each captured image correlated to a different polarization state. Moreover, one or more algorithms may be utilized to process the images captured at different polarizations and generate relatively detailed images that can highlight features not typically visible in standard intensity-based imaging.

Sensor data (e.g., image data, three-dimensional data, thermal data) captured by the cameras may be analyzed to identify and classify objects (e.g., the transport vehicles 104, living organisms, obstacles) depicted within the sensor data. For example, the guidance system 202 may analyze the sensor data to identify and classify objects depicted in the sensor data. In some embodiments, the guidance system 202 may determine bounding boxes (e.g., a point, width, and height) of the detected objects. In additional embodiments, the guidance system 202 may perform object segmentation (e.g., object instance segmentation or sematic segmentation) to associate specific pixels of the sensor data with the detected one or more objects. In further embodiments, the guidance system 202 may classify (e.g., label) the detected objects according to determined object types.

In some embodiments, the sensor data may be analyzed via deep learning techniques (e.g., deep neural networks) to detect and classify the objects within the sensor data. For example, the guidance system 202 may utilize one or more of DNN instance models, convolutional neural networks (CNNs), single shot detectors (SSDs), region-convolutional neural networks (R-CNNs), Faster R-CNN, Region-based Fully Convolutional Networks (R-FCNs) and other machine learning models to perform the object detection and classification. In some embodiments, analyzing the sensor data may be performed utilizing one or more other or additional algorithms or models, such as, a YOLO (You Only Look Once) algorithm, Single Shot MultiBox Detector, EfficientDet, RetinaNet, DeepLab, U-Net, or MobileNet.

Any of the foregoing models may be trained to perform object detection and classification. For example, in some embodiments, the models may be trained using a combination of real sensor data (e.g., sensor data captured via one or more sensor (e.g., image) systems) and synthetic data (e.g., data that is artificial generated using algorithms and/or computer simulations). In some embodiments, the synthetic data may include sensor data depicting objects of interest (e.g., transport vehicles, agricultural vehicles, carts, living organisms, telecommunication boxes, safety poles, power boxes, road markers, road signs, etc.) with differing environments (e.g., types, amounts, and heights of vegetation, occlusion levels, light configurations, viewing angles and types (e.g., fish eye and perspective)).

Responsive identifying an object and the determining the location of the object, the classification and location of the object of interest may be logged (e.g., stored) with the memory of the guidance system 202. For example, the GNSS coordinates of the object may be logged within a database of the guidance system 202, and the stored location of the object may be utilized guiding the agricultural vehicle 106 and/or the cart 108 along the determined path.

In embodiments including LIDAR cameras, the LIDAR cameras may be utilized to emit laser pulses, and the captured three-dimensional data may be utilized to generate a three-dimensional representation (e.g., map) of an environment around the agricultural vehicle 106 and/or the cart 108. Moreover, causing the agricultural vehicle 106 and the cart 108 to automatically align with the detected (e.g., identified) single transport vehicle 104 may further include one or more distance measurements between detected objects and the agricultural vehicle 106 and/or the cart 108. For instance, by way of the one or more sensors 208, the guidance system 202 may continuously and/or iteratively measure distances between the agricultural vehicle 106 and the cart 108 and obstacles.

The one or more sensors 208 may be utilized to capture a 360-degree view of an environment around the agricultural vehicle 106 and/or the cart 108. In embodiments including ultrasonic sensors, the ultrasonic sensors may be utilized to detect objects near to the agricultural vehicle 106 and/or the cart 108 by way of sound waves and measure distances between the objects and the agricultural vehicle 106 and/or the cart 108 while the agricultural vehicle 106 and the cart 108 are traveling along the determined path and aligning with transport vehicle 104. In embodiments including radar sensors, the radar sensors may be utilized to detect objects, determine distances of the objects from the agricultural vehicle 106 and/or the cart 108, and measure the objects' speeds relative to the agricultural vehicle 106 and/or the cart 108.

Causing the agricultural vehicle 106 and the cart 108 to automatically align with the detected (e.g., identified) single transport vehicle 104 may further include utilizing any of the data acquired via the one or more sensors 208 to adjust a trajectory of the determined path prior to the agricultural vehicle 106 and/or cart 108 traveling along the determined path and/or while the agricultural vehicle 106 and/or cart 108 is traveling along the determined path. For example, the guidance system 202 may utilizing any of the real-time data acquired via the one or more sensors 208 to adjust a trajectory of the determined path to facilitate the agricultural vehicle 106 and the cart 108 reaching the aligned position. Adjusting the trajectory of the determined path may include a continuous recalibration of the determined path as new real-time data is captured and analyzed.

Causing the agricultural vehicle 106 and the cart 108 to automatically align with the identified single transport vehicle 104 may further actuating one or more of the actuators 710 of the agricultural vehicle 106 and/or the cart 108 to control steering operations (e.g., a steering angle), a traveling direction, and/or a traveling speed (e.g., velocity) of the agricultural vehicle 106 and/or the cart to follow the determined path. Moreover, causing the agricultural vehicle 106 and the cart 108 to automatically align with the identified single transport vehicle 104 may include executing one or more final adjustments once the agricultural vehicle 106 and the cart 108 are proximate and/or at the aligned position.

Responsive to aligning the agricultural vehicle 106 and the cart 108 with the detected (e.g., identified) single transport vehicle 104, the method 800 may optionally include causing the cart 108 to unload the commodity into the detected (e.g., identified) single transport vehicle 104, as shown in act 814 of FIG. 8. For instance, the guidance system 202 may cause the unloading system 116 to unload a commodity within the cart 108 from the cart 108 into the trailer 408 of the single transport vehicle 104. In some embodiments, causing the unloading system 116 to unload the commodity may include causing an auger of the unloading system 116 to rotate to move (e.g., push) the commodity through an inclined chute and to drop into the trailer 408 of the transport vehicle 104. In some embodiments, causing the cart 108 to unload the commodity into the single transport vehicle 104 may include requesting an operator to initiate an unloading procedure remotely.

Referring still to FIG. 8, responsive to detecting a plurality of transport vehicles 104, the method 800 providing one or more of the received position data and the sensor data (e.g., data captured via the one or more sensors 208) to one or more of a remote device 712 or an input/output device 206, as shown in act 808 of FIG. 8. For example, the guidance system 202 may provide one or more of the received position data and sensor data (e.g., data captured via the one or more sensors 208) to one or more of a remote device (e.g., remote device 712) or an input/output device (e.g., the input/output device 206). The sensor data may include any of the sensor data described above (e.g., video data, image data, GNSS data, LIDAR data, thermal data, ultrasonic data, etc.).

In some embodiments, providing the received position data and the sensor data to one or more of a remote device 712 or an input/output device 206 may include requesting a selection of one of the detected plurality of transport vehicles 104 based on the position data and the sensor data. For example, the provided position data and sensor data may include image data or video data that can be displayed to an operator to enable the operator to select a transport vehicle 104 of the detected plurality of transport vehicles 104. In some embodiments, the input/output device 206 and/or remote device 712 may include a display within another agricultural vehicle (e.g., a combine). In one more embodiments, the input/output device 206 and/or remote device 712 may include a display within one of the detected transport vehicles 104. In additional embodiments, the input/output device 206 and/or remote device 712 may be remote from agricultural vehicle 106 and the transport vehicle 104 and may include a mobile device (e.g., a cell phone, a smartphone, a PDA, a tablet, a laptop, a watch, a wearable device, a smart speaker, etc.).

The method 800 may further include receiving a selection of one of the detected plurality of transport vehicles 104, as shown in act 810 of FIG. 8. For example, the guidance system 202 may receive the selection (e.g., operator input) from the input/output device 206 and/or remote device 712. In some embodiments, the guidance system 202 may receive the selection by way of one more wireless communication protocols. For example, the guidance system 202 may receive the selection by way of the wireless transceiver 212 of the guidance system 202. The selection may include a data package identifying one of the plurality of transport vehicles 104. For instance, the data package may include a selection of a transport vehicle 104 within image data, selection of a GNSS position, selection of a three-dimensional representation of a transport vehicle 104, etc.

Additionally, the method 800 may include, responsive to receiving the selection of the one of the plurality of transport vehicles, causing the agricultural vehicle 106 and the cart 108 to automatically align with the selected transport vehicle 104, as shown in act 812 of FIG. 8. For example, the guidance system 202 may cause the agricultural vehicle 106 and the cart 108 to align with the selected transport vehicle 104 via any of the manners described above in regard to act 806 of FIG. 8.

Responsive to aligning the agricultural vehicle 106 and the cart 108 with the selected transport vehicle 104, the method 800 may optionally include causing the cart 108 to unload the commodity into the single transport vehicle 104 or the selected transport vehicle 104, as shown in act 814 of FIG. 8. For instance, the guidance system 202 may cause the cart 108 to unload the commodity via any of the manners described above in regard to act 814 of FIG. 8.

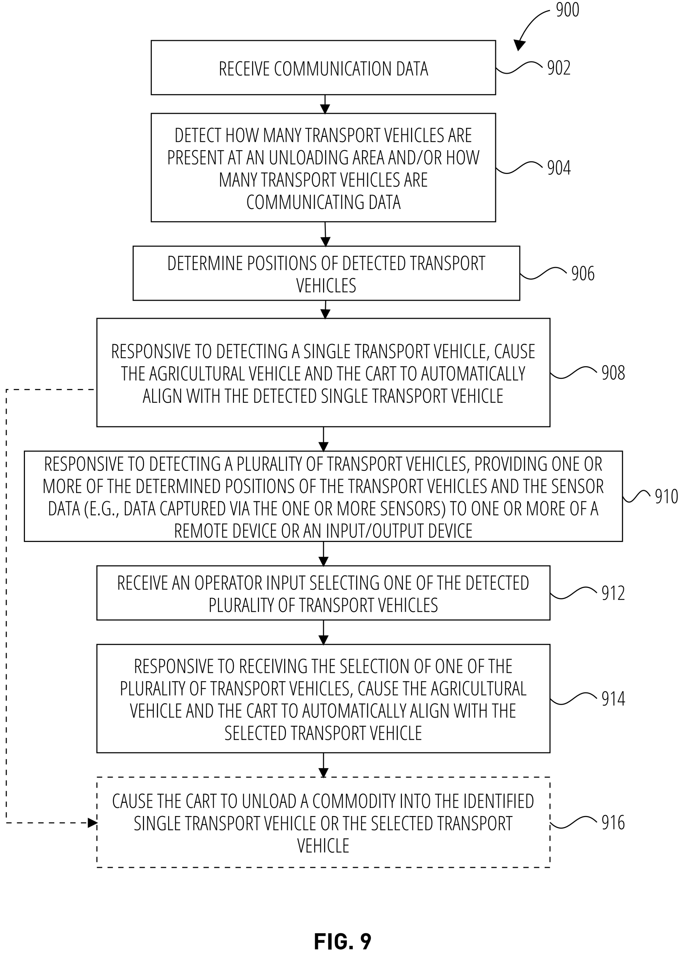

FIG. 9 shows a flowchart of a method 900 of controlling operation an agricultural vehicle (e.g., agricultural vehicle 106) (e.g., a tractor) and/or a cart (e.g., cart 108) and aligning the agricultural vehicle and/or the cart within a transport vehicle during an agricultural process (e.g., a harvesting operation, unloading operation, etc.) according to one or more embodiments of the disclosure. In one or more embodiments, a guidance system (e.g., guidance systems 202) may perform one or more acts of the method 900. For purposes of description of FIG. 9, the guidance system 202 is described as performing one or more acts of the method 900; however, it is understood that any of the guidance systems (e.g., guidance systems 202) described herein may perform one or more acts of the method 900. Furthermore, for purposes of the description of FIG. 9, a transport vehicle 104 or transport vehicles 104 are referenced; however, it is understood that the method 900 can be utilized with any of the transport vehicles (e.g., transport vehicle 104, 502, 602) described herein. Additionally, in some embodiments, one or more acts of the method 900 may be performed by the control system 204 of the agricultural vehicle 106 and/or one or more remote devices (e.g., remote devices 712).

In some embodiments, the method 900 may include receiving communication data, as shown in act 902 of FIG. 9. For example, the guidance system 202 of the control system 204 of the agricultural vehicle 106 may receive the communication data. In some embodiments, the communication data may be received from the computing devices 410 of one or more transport vehicles 104. In some embodiments, the communication data is received wirelessly through on or more wireless communication protocols. In one or more embodiments, the communication data may be received by way of the wireless transceiver 212 of the guidance system 202.

In one or more embodiments, the communication data may include one or more radio signals. As a non-limiting example, the radio signals may include directional radio waves. Directional radio waves may include radio frequency signals that are transmitted or received with greater power in specific directions. The focused transmission or reception may be achieved using directional antennas, which may concentrate the radio wave energy into a relatively narrow beam. Narrowed beams allow for more precise targeting and reception of radio signals, as opposed to omnidirectional waves that radiated or received generally uniformly in all directions.

Receiving the communication data may be triggered by the autonomous agricultural system 102 (FIG. 2) approaching an unloading gate and/or unloading area of an agricultural field (e.g., a designated area or structure where harvested crops are intended to be transferred from field equipment, such as, combines or grain carts, to transport vehicles or storage facilities). For example, responsive to the autonomous agricultural system 102 crossing a geofence and/or virtual boundary, the guidance system 202 of the autonomous agricultural system 102 may seek communication from the computing devices 410 of the one or more transport vehicles 104, and/or the computing devices 410 of the one or more transport vehicle 104 may initiate communication (e.g., transmission and/or reception of communication) via the wireless transceiver 412 of the computing device 410. In some embodiments, the computing devices 410 of the transport vehicles 104 may monitor or be in communication with a device that monitors a geofence and/or virtual boundary of an agricultural field. In additional embodiments, the guidance system 202 of the autonomous agricultural system 102 may monitor or be in communication with a device that monitors a geofence and/or virtual boundary and may ping (e.g., output a communication to) the transport vehicles 104 responsive to crossing the geofence and/or virtual boundary.

The method 900 may include detecting how many transport vehicles 104 are present at an unloading area and/or how many transport vehicles 104 are communicating data, as shown in act 904 of FIG. 9. For example, the guidance system 202 of the control system 204 of the agricultural vehicle 106 may detect how many transport vehicles 104 are present at an unloading area and/or how many transport vehicles 104 are communicating data (e.g., emitting radio signals). In some embodiments, the guidance system 202 may determine how many instances (i.e., communications) of radio signals were received or from how many sources radio signals were received to detect (e.g., determine) how many transport vehicles 104 are present at an unloading area and/or how many transport vehicles 104 are communicating position data. For example, in response to receiving a radio signals from a single source, the method 900 may include determining and detecting that a single transport vehicle 104 is present. In response to receiving radio signals from multiple sources, the method 900 may include determining and detecting that multiple transport vehicles 104 are present.

Referring still to FIG. 9, the method 900 may include determining positions of the detected transport vehicles 104, as shown in act 906 of FIG. 9. For example, the guidance system 202 may determine the positions of the detected transport vehicles 104. In some embodiments, positions (e.g., locations) of the detected transport vehicles 104 relative to the agricultural vehicle 106 may be determined by way of the received communication data (e.g., radio signals). For example, the wireless transceiver 212 of the agricultural vehicle 106 may include one or more directional antennas configured to receive radio signals with greater sensitivity in specific directions, enabling the guidance system 202 to detect a strength and an angle of arrival (AOA) of the radio signals received from the transport vehicles 104. By comparing strengths of and angles from which the radio signals are received, the guidance system 202 may employ one or more triangulation techniques to calculate a relatively precise geolocations (e.g., positions) of the detected transport vehicles 104 relative to the agricultural vehicle 106. In particular, a known GNSS position of the agricultural vehicle 106 (i.e., a known position of the guidance system 202) and the detected (e.g., measured) strengths and angles of arrival (AOA) of the radio signals may be used to determine geometric relationships between the known position of the guidance system 202 and the detected transport vehicles 104 to determine positions (e.g., estimated GNSS positions) of the detected transport vehicles 104. While act 906 of FIG. 9 is shown as occurring subsequent to act 904, the disclosure is not so limited, and the acts of method 900 can occur in a different order. For instance, act 906 could occur immediately after act 902 or during or simultaneously with acts 908 and 914.

In some embodiments, determining positions of the detected transport vehicles 104 may include capturing sensor data related to the detected transport vehicles 104 and determining the positions of the detected transport vehicles 104 from the captured sensor data (e.g., image data, video data, LIDAR data, RADAR data, thermal data, 3D data, and/or sound data). For example, using the one or more sensors 208 to capture sensor data and analyzing the captured sensor data via any of the manners described herein to identify and classify the detected transport vehicles 104 within the sensor data, the guidance system 202 may determine positions of the detected transport vehicles 104 relative to the agricultural vehicle 106. Furthermore, when using two-dimensional sensor data, the guidance system 202 may extract the positions of the transport vehicles 104 within the image plane (e.g., x, y coordinates). In other words, the guidance system 202 extracts the positions of the transport vehicles 104 in the captured images. Additionally, when using three-dimensional sensor data, depth information is also captured, and positions of the transport vehicles 104 may be extracted in a x, y, and z coordinates (e.g, a 3D space). Subsequently, the guidance system 202 may apply one or more geometric transformations (e.g., triangulation, depth estimation) to convert the positions of the transport vehicles 104 within the sensor data from the sensor's coordinate system (e.g., the sensor's point of view) to a real-world coordinate system (e.g., GNSS position). In particular, a known GNSS position of the agricultural vehicle 106 (i.e., a known position of the guidance system 202) and the determined positions of the detected transport vehicles 104 relative to the agricultural vehicle 106 (e.g., sensor 208 may be used to estimate GNSS positions of the detected transport vehicles 104).

In some embodiments, the determined positions of the detected transport vehicles 104 are cross-referenced with other data acquired by the guidance system 202. For example, responsive to determining positions of the transport vehicles 104, the determined positions of the transport vehicles 104 may be correlated (i.e., matched) to respective transport vehicles 104 detected via the one or more sensors 208 of the agricultural vehicle 106. For example, as is described in greater detail below, the one or more sensors 208 may capture sensor data (e.g., images) of the detected transport vehicles 104, and the guidance system 202 may detect and classify the one or more transport vehicles 104 in the sensor data and correlate the determined positions to the one or more transport vehicles 104. The detection of the transport vehicles 104 may be achieved via any of the manners described herein.

Referring still to FIG. 9, responsive to detecting a single transport vehicle 104, the method 900 may include causing the agricultural vehicle 106 and the cart 108 to automatically align with the detected (e.g., identified) single transport vehicle 104, as shown in act 908 of FIG. 9. For example, the guidance system 202 of the control system 204 of the agricultural vehicle 106 may control one or more actuators 710 and one or more operations (e.g., steering and propulsion) of the agricultural vehicle 106 and/or cart 108 to cause the agricultural vehicle 106 and/or cart 108 to align with the detected (e.g., identified) single transport vehicle 104 via any of the manners described above in regard to act 806 of FIG. 8.

Responsive to aligning the agricultural vehicle 106 and the cart 108 with the detected (e.g., identified) single transport vehicle 104, the method 900 may optionally include causing the cart 108 to unload the commodity into the detected (e.g., identified) single transport vehicle 104, as shown in act 916 of FIG. 9. For instance, the guidance system 202 may cause the unloading system 116 to unload a commodity within the cart 108 from the cart 108 into the trailer 408 of the single transport vehicle 104 according to any of the manners described above in regard to act 814 of FIG. 8.

Referring still to FIG. 9, responsive to detecting a plurality of transport vehicles 104, the method 900 may include providing one or more of the determined positions of the plurality of transport vehicles 104 and the sensor data (e.g., data captured via the one or more sensors 208) to one or more of a remote device 712 or an input/output device 206, as shown in act 910 of FIG. 9. For example, the guidance system 202 may provide one or more of the determined positions of the plurality of transport vehicles 104 and the captured sensor data (e.g., data captured via the one or more sensors 208) to one or more of a remote device (e.g., remote device 712) or an input/output device (e.g., the input/output device 206). The sensor data may include any of the sensor data described above (e.g., image data, video data, GNSS data, LIDAR data, thermal data, ultrasonic data, etc.).

In some embodiments, providing the determined positions of the plurality of transport vehicles 104 and the sensor data to one or more of a remote device or an input/output device may include requesting a selection of one of the detected plurality of transport vehicle 104 based on the determined positions of the plurality of transport vehicles 104 and the sensor data. For example, the determined positions of the plurality of transport vehicles 104 and the sensor data may include image data that can be displayed to an operator to enable the operator to select a transport vehicle 104 of the detected plurality of transport vehicle 104. In some embodiments, the input/output device 206 and/or remote device 712 may include a display within another agricultural vehicle (e.g., a combine). In one more embodiments, the input/output device 206 and/or remote device 712 may include a display within one of the detected transport vehicles 104. In additional embodiments, the input/output device 206 and/or remote device 712 may be remote from agricultural vehicle 106 and the transport vehicle 104 and may include a mobile device (e.g., a cell phone, a smartphone, a PDA, a tablet, a laptop, a watch, a wearable device, a smart speaker, etc.).

The method 900 may further include receiving a selection of one of the detected plurality of transport vehicles 104, as shown in act 912 of FIG. 9. For example, the guidance system 202 may receive the selection (e.g., operator input) from the input/output device 206 and/or the remote device 712 via any of the manners described above in regard to act 810 of FIG. 8.

Additionally, the method 900 may include, responsive to receiving the selection of one of the plurality of transport vehicles 104, causing the agricultural vehicle 106 and the cart 108 to automatically align with the selected transport vehicle 104, as shown in act 914 of FIG. 9. For example, the guidance system 202 may cause the agricultural vehicle 106 and the cart 108 to align with the selected transport vehicle 104 via any of the manners described above in regard to act 812 of FIG. 8.

Responsive to aligning the agricultural vehicle 106 and the cart 108 with the selected transport vehicle 104, the method 900 may optionally include causing the cart 108 to unload the commodity into the single transport vehicle 104, as shown in act 916 of FIG. 9. For instance, the guidance system 202 may cause the cart 108 to unload the commodity via any of the manners described above in regard to act 814 of FIG. 8.

FIG. 10 shows a flowchart of a method 1000 of controlling operation an agricultural vehicle (e.g., agricultural vehicle 106) (e.g., a tractor) and/or a cart (e.g., cart 108) and aligning the agricultural vehicle and/or the cart within a transport vehicle during an agricultural process (e.g., a harvesting operation, unloading operation, etc.) according to one or more embodiments of the disclosure. In one or more embodiments, a guidance system (e.g., guidance systems 202) may perform one or more acts of the method 1000. For purposes of description of FIG. 10, the guidance system 202 is described as performing one or more acts of the method 1000; however, it is understood that any of the guidance systems (e.g., guidance systems 202) described herein may perform one or more acts of the method 1000. Furthermore, for purposes of the description of FIG. 10, a transport vehicle 104 or transport vehicles 104 are referenced; however, it is understood that the method 1000 can be utilized with any of the transport vehicles (e.g., transport vehicle 402, 502, 602) described herein. Additionally, in some embodiments, one or more acts of the method 1000 may be performed by the control system 204 of the agricultural vehicle 106 and/or one or more remote devices (e.g., remote devices 712).

In one or more embodiments, the method 1000 include capturing, via one or more sensors 208 of the guidance system 202 of the agricultural vehicle 106, identification data related to at least one transport vehicle 104, as shown in act 1002 of FIG. 10. For example, the guidance system 202 of the control system 204 of the agricultural vehicle 106 may utilize the one or more sensors 208 to capture the identification data. In some embodiments, capturing the identification data may include capturing sensor data (e.g., image data) including at least one representation of the at least one transport vehicle 104 via any of the manners described herein and via any of the sensors 208 described herein. For instance, the captured identification data may include sensor data including at least one representation of the at least one transport vehicle 104. Furthermore, the sensor data may include any of the types of sensor data described herein. In additional embodiments, the captured identification data may include received radio signals from a radio frequency identification (RFID) tag of the at least one transport vehicle 104.

The identification data may include a captured representation of one or more identifying markers (e.g., markers 610a, 610b, 610c, 610d) depicted (e.g., formed, printed, demonstrated) on the at least one transport vehicle 104. The one or more identifying markers may include one or more of a text marker, a quick response (QR) code, a barcode, an aztec code, a data matrix code, a PDF417 code, a micro QR code, or an iQR code of the at least one transport vehicle 104. For example, the identification data may include captured representations of any of the markers desribed above in regard to FIG. 6.

In some embodiments, capturing, via the one or more sensors 208 of the guidance system 202 of the agricultural vehicle 106, identification data related to at least one transport vehicle 104 may include activating and reading an RFID tag. For example, in some embodiments, the one or more sensors 208 of the guidance system 202 alone, or in combination with the wireless transceiver 212, may include a marker (e.g., identifying marker) reader (e.g., 2D barcode scanner or 2D code reader).

In embodiments where the at least one transport vehicle 104 includes a passive RFID tag, the one or more sensors 208 and/or wireless transceiver 212 (e.g., the guidance system 202) may emit an electromagnetic field (e.g., radio waves) to activate the passive RFID tag, and the guidance system 202, by way of the one or more sensors 208 and/or wireless transceiver 212, may receive a modulated radio signal including identification data (e.g., an identification number) back from the passive RFID tag. For example, the passive RFID tag may be energized by radio waves emitted from the one or more sensors 208 and/or wireless transceiver 212 (i.e., an RFID reader), and the radio waves may power a microchip of the RFID tag, allowing the RFID tag to transmit its stored data (i.e., identification data) back to the one or more sensors 208 and/or wireless transceiver 212. In embodiments where the at least one transport vehicle 104 includes an active RFID tag, the RFID tag may be activated by the computing device 410 of the at least one transport vehicle 104 (e.g., responsive to a trigger, as described below). The one or more sensors 208 and/or wireless transceiver 212 of the agricultural vehicle 106 may capture the modulated radio signal including identification data (e.g., an identification number) from the active RFID tag.

Capturing the identification data may be triggered by the autonomous agricultural system 102 (FIG. 2) approaching an unloading gate and/or unloading area of an agricultural field (e.g., a designated area or structure where harvested crops are intended to be transferred from field equipment, such as, combines or grain carts, to transport vehicles or storage facilities). For example, responsive to the autonomous agricultural system 102 crossing a geofence and/or virtual boundary, the guidance system 202 of the autonomous agricultural system 102 may cause the identification data to be captured by the guidance system 202 via the one or more sensors 208 and/or the wireless transceiver 212. In some embodiments, the guidance system 202 of the autonomous agricultural system 102 may monitor or be in communication with a device that monitors a geofence and/or virtual boundary and may initiate capturing of the identification data responsive to crossing the geofence and/or virtual boundary. In some embodiments, triggering capture of the identification data includes causing an RFID tag (e.g., a passive RFID tag or an active RFID tag) of the at least one transport vehicle 104 to be activated via any of the manners described above.

The method 1000 may include determining whether the at least one transport vehicle 104 includes a single transport vehicle 104 or a plurality of transport vehicles 104, as shown in act 1004 of FIG. 10. For example, the guidance system 202 of the control system 204 of the agricultural vehicle 106 may detect how many transport vehicles 104 are present at an unloading area by determining how many transport vehicles 104 are represented within the captured identification data. In some embodiments, determining whether the at least one transport vehicle 104 includes a single transport vehicle 104 or a plurality of transport vehicles 104 may include analyzing the identification data captured by the one or more sensors 208. For example, in embodiments where the identification data includes sensor data, the sensor data may be analyzed to identify and classify objects (e.g., the transport vehicles transport vehicle 104, living organisms, obstacles) depicted within the sensor data to determine how many transport vehicles are present within the unloading area. The sensor data may be analyzed via any of the manners described herein. Based on the transport vehicles 104 identified (e.g., detected) within the unloading area via the analysis, the guidance system 202 may determine whether the at least one transport vehicle 104 includes a single transport vehicle 104 or a plurality of transport vehicles 104. For instance, if only one transport vehicle 104 is detected, the guidance system 202 determines that the at least one transport vehicle 104 includes a single transport vehicle 104. Alternatively, if a plurality of transport vehicles 104 are detected, the guidance system 202 determines that the at least one transport vehicle 104 includes a plurality of transport vehicles 104.

In one or more embodiments, the guidance system 202 may determine how many instances (i.e., communications) of radio signals were received from RFID tags or from how many sources radio signals were received to detect (e.g., determine) how many transport vehicles 104 are present at an unloading area. For example, in response to receiving a radio signals from a single RFID tag, the method 900 may include determining and detecting that a single transport vehicle 104 is present. In response to receiving radio signals from multiple RFID tags, the method 900 may include determining and detecting that multiple transport vehicles 104 are present.

In some embodiments, the method 1000 may include determining a position of the at least one transport vehicle 104 via any of the manners described herein. For instance, in some embodiments, the position of the at least one transport vehicle 104 may be determined via received position data. In additional embodiments, the position of the at least one transport vehicle 104 may be determined via analysis of the sensor data.

The method 1000 may further include, responsive to determining that the at least one transport vehicle 104 includes a single transport vehicle 104, causing the agricultural vehicle 106 to automatically align with the detected (e.g., identified) single transport vehicle 104, as shown in act 1006 of FIG. 10. For example, the guidance system 202 of the control system 204 of the agricultural vehicle 106 may control one or more actuators 710 and one or more operations (e.g., steering and propulsion) of the agricultural vehicle 106 and/or cart 108 to cause the agricultural vehicle 106 and/or cart 108 to align with the detected (e.g., identified) single transport vehicle 104 via any of the manners described above in regard to act 806 of FIG. 8.

Responsive to aligning the agricultural vehicle 106 and the cart 108 with the detected (e.g., identified) single transport vehicle 104, the method 1000 may optionally include causing the cart 108 to unload the commodity into the detected (e.g., identified) single transport vehicle 104 according to the manners described above in regard to act 814 of FIG. 8.

Responsive to determining that the at least one transport vehicle 104 includes a plurality of transport vehicles 104, the method 1000 may include analyzing the captured identification data to identify a target transport vehicle 104 from the plurality of transport vehicles 104, as shown in act 1008 of FIG. 10. For example, the guidance system 202 may analyze the captured identification data to identify a target transport vehicle from the plurality of transport vehicles 104. In some embodiments, the identification data may be analyzed by way of reading markers (e.g., markers 610a) indicated in the identification data by way of an identification marker reader, as described above. In other words, analyzing the captured identification data to identify a target transport vehicle from the plurality of transport vehicles 104 may include scanning the markers (e.g., markers 610a) formed on the plurality of transport vehicles 104. Put yet another way, analyzing the captured identification data to identify a target transport vehicle from the plurality of transport vehicles 104 may include detecting the (e.g., markers 610a) formed on the plurality of transport vehicles 104, classifying the markers, and reading the markers (e.g., determining the data stored or indicated by the markers). In additional embodiments, the identification data may be analyzed via any of the sensor data analyses described herein. In further embodiments, identification data received from an RFID tag may be analyzed via any know method to determine an identification number of the respective transport vehicle.

Furthermore, based on the analysis of the captured identification data, the guidance system 202 may determine which transport vehicle 104 of the plurality of transport vehicles 104 matches a target transport vehicle. In some embodiments, determining which transport vehicle 104 of the plurality of transport vehicles 104 matches a target transport vehicle may include determining which transport vehicle 104 includes one or more identifying markers (e.g., markers 610a) or an identification number represented in the captured identification data that matches a known identifying marker (e.g., stored marker) or a known identification number of a target transport vehicle. In some embodiments, identification data (e.g., data on an identifying marker and/or the known identification number) of the target transport vehicle may be stored within memory of the guidance system 202. In one or more embodiments, the identification data of the target transport vehicle may be previously received or input into the guidance system 202. For example, the target transport vehicle may include a transport vehicle previously selected and predetermined.

Responsive to identifying the target transport vehicle within the plurality of transport vehicles 104, the method 1000 includes causing the agricultural vehicle 106 to automatically align with the target transport vehicle, as shown in act 1010 of FIG. 10. For example, the guidance system 202 may cause the agricultural vehicle 106 and the cart 108 to align with the target transport vehicle via any of the manners described above in regard to act 812 of FIG. 8.

Responsive to aligning the agricultural vehicle 106 and the cart 108 with the target transport vehicle, the method 1000 may optionally include causing the cart 108 to unload the commodity into the target transport vehicle via any of the manners described above in regard to act 814 of FIG. 8.

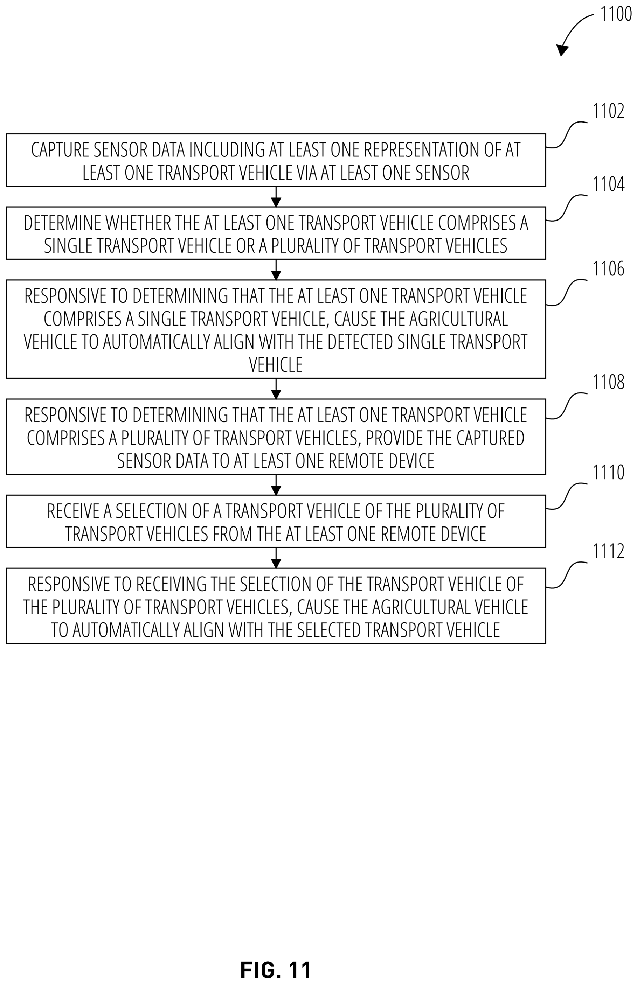

FIG. 11 shows a flowchart of a method 1100 of controlling operation an agricultural vehicle (e.g., agricultural vehicle 106) (e.g., a tractor) and/or a cart (e.g., cart 108) and aligning the agricultural vehicle and/or the cart within a transport vehicle during an agricultural process (e.g., a harvesting operation, unloading operation, etc.) according to one or more embodiments of the disclosure. In one or more embodiments, a guidance system (e.g., guidance systems 202) may perform one or more acts of the method 1100. For purposes of description of FIG. 11, the guidance system 202 is described as performing one or more acts of the method 1100; however, it is understood that any of the guidance systems (e.g., guidance systems 202) described herein may perform one or more acts of the method 1100. Furthermore, for purposes of the description of FIG. 11, a transport vehicle 104 or transport vehicles 104 are referenced; however, it is understood that the method 1100 can be utilized with any of the transport vehicles (e.g., transport vehicle 402, 502, 602) described herein. Additionally, in some embodiments, one or more acts of the method 1100 may be performed by the control system 204 of the agricultural vehicle 106 and/or one or more remote devices (e.g., remote devices 712).

The method 1100 may include capturing sensor data including at least one representation of at least one transport vehicle via one or more sensors 208 of the guidance system 202, as shown in act 1102 of FIG. 11. For example, the guidance system 202 may cause sensor data, including at least one representation of at least one transport vehicle, to be captured via one or more sensors 208. In some embodiments, capturing sensor data including at least one representation of at least one transport vehicle may include capturing sensor data including at least one representation of at least one transport vehicle within an unloading area of an agricultural field. The one or more sensors 208 may include any of the sensors described herein, and the sensor data may include any of the sensor data described herein.

Capturing the sensor data may be triggered by the autonomous agricultural system 102 (FIG. 2) approaching an unloading gate and/or unloading area of an agricultural field (e.g., a designated area or structure where harvested crops are intended to be transferred from field equipment, such as, combines or grain carts, to transport vehicles or storage facilities). For example, responsive to the autonomous agricultural system 102 crossing a geofence and/or virtual boundary, the guidance system 202 of the autonomous agricultural system 102 may cause the one or more sensors 208 to capture sensor data related to the one or more transport vehicles 104. In additional embodiments, the guidance system 202 of the autonomous agricultural system 102 may monitor or be in communication with a device that monitors a geofence and/or virtual boundary and may cause the one or more sensors 208 to capture sensor data related to the one or more transport vehicles 104 responsive to crossing the geofence and/or virtual boundary.

The method 1100 may include determining whether the at least one transport vehicle 104 includes a single transport vehicle 104 or a plurality of transport vehicles 104, as shown in act 1104 of FIG. 11. For example, the guidance system 202 of the control system 204 of the agricultural vehicle 106 may detect how many transport vehicles 104 are present at an unloading area by determining how many transport vehicles 104 are represented within the captured sensor data. In some embodiments, determining whether the at least one transport vehicle 104 includes a single transport vehicle 104 or a plurality of transport vehicles 104 may include analyzing the sensor data captured by the one or more sensors 208. For example, the sensor data may be analyzed to identify and classify objects (e.g., the transport vehicles transport vehicle 104, living organisms, obstacles) depicted within the sensor data to determine how many transport vehicles are present within the unloading area. The sensor data may be analyzed via any of the manners described herein. Based on the transport vehicles 104 identified (e.g., detected) within the unloading area via the analysis, the guidance system 202 may determine whether the at least one transport vehicle 104 includes a single transport vehicle 104 or a plurality of transport vehicles 104. For instance, if only one transport vehicle 104 is detected, the guidance system 202 determines that the at least one transport vehicle 104 includes a single transport vehicle 104. Alternatively, if a plurality of transport vehicles 104 are detected, the guidance system 202 determines that the at least one transport vehicle 104 includes a plurality of transport vehicles 104.

In some embodiments, the method 1100 may include determining a position of the at least one transport vehicle 104 via any of the manners described herein. For instance, in some embodiments, the position of the at least one transport vehicle 104 may be determined via received position data. In additional embodiments, the position of the at least one transport vehicle 104 may be determined via analysis of the sensor data.

The method 1100 may further include, responsive to determining that the at least one transport vehicle 104 includes a single transport vehicle 104, causing the agricultural vehicle 106 to automatically align with the detected (e.g., identified) single transport vehicle 104, as shown in act 1106 of FIG. 11. For example, the guidance system 202 of the control system 204 of the agricultural vehicle 106 may control one or more actuators 704 and one or more operations (e.g., steering and propulsion) of the agricultural vehicle 106 and/or cart 108 to cause the agricultural vehicle 106 and/or cart 108 to align with the detected (e.g., identified) single transport vehicle 104 via any of the manners described above in regard to act 806 of FIG. 8.

Responsive to aligning the agricultural vehicle 106 and the cart 108 with the detected (e.g., identified) single transport vehicle 104, the method 1000 may optionally include causing the cart 108 to unload the commodity into the detected (e.g., identified) single transport vehicle 104 according to the manners described above in regard to act 814 of FIG. 8.

Referring still to FIG. 11, responsive to detecting a plurality of transport vehicles 104, the method 1100 may include providing the captured sensor data to one or more of a remote device 708 or an input/output device 206, as shown in act 1108 of FIG. 11. For example, the guidance system 202 may provide (e.g., output) the captured sensor data to one or more of a remote device 708 or the input/output device 206 of the guidance system 202.

In some embodiments, providing the captured the sensor data to one or more of a remote device 708 or the input/output device 206 of the guidance system 202 may include requesting a selection of one of the detected plurality of transport vehicles transport vehicle 104 based on the sensor data. For example, the provided sensor data may include image data or video data that can be displayed to an operator to enable the operator to select a transport vehicle 104 of the detected plurality of transport vehicles 104. In some embodiments, the input/output device 206 and/or remote device 708 may include a display within another agricultural vehicle (e.g., a combine). In one more embodiments, the input/output device 206 and/or remote device 708 may include a display within one of the detected transport vehicles 104. In additional embodiments, the input/output device 206 and/or remote device 708 may be remote from agricultural vehicle 106 and the transport vehicle 104 and may include a mobile device (e.g., a cell phone, a smartphone, a PDA, a tablet, a laptop, a watch, a wearable device, a smart speaker, etc.).

The method 1100 may further include receiving a selection of one of the detected plurality of transport vehicles 104, as shown in act 1110 of FIG. 11. For example, the guidance system 202 may receive the selection (e.g., operator input) from the input/output device 206 and/or the remote device 708. In some embodiments, the guidance system 202 may receive the selection by way of one more wireless communication protocols. For example, the guidance system 202 may receive the selection by way of the wireless transceiver 212 of the guidance system 202. The selection may include a data package identifying one of the plurality of transport vehicles 104. For instance, the data package may include a selection of a transport vehicle 104 within image data, selection of a GNSS position, selection of a three-dimensional representation of a transport vehicle 104, etc.

Additionally, the method 1100 may include, responsive to receiving the selection of the one of the plurality of transport vehicles 104, causing the agricultural vehicle 106 and the cart 108 to automatically align with the selected transport vehicle 104, as shown in act 1112 of FIG. 11. For example, the guidance system 202 may cause the agricultural vehicle 106 and the cart 108 to align with the selected transport vehicle 104 via any of the manners described above in regard to act 806 of FIG. 8.

Responsive to aligning the agricultural vehicle 106 and the cart 108 with the selected transport vehicle 104, the method 1100 may optionally include causing the cart 108 to unload the commodity into the selected transport vehicle 104, as shown in act 814 of FIG. 8. For instance, the guidance system 202 may cause the cart 108 to unload the commodity via any of the manners described above in regard to act 814 of FIG. 8.

FIG. 12 shows a flowchart of a method 1200 of controlling operation an agricultural vehicle (e.g., agricultural vehicle 106) (e.g., a tractor) and/or a cart (e.g., cart 108) and aligning the agricultural vehicle and/or the cart within a transport vehicle during an agricultural process (e.g., a harvesting operation, unloading operation, etc.) according to one or more embodiments of the disclosure. In one or more embodiments, a guidance system (e.g., guidance systems 202) may perform one or more acts of the method 1200. For purposes of description of FIG. 12, the guidance system 202 is described as performing one or more acts of the method 1200; however, it is understood that any of the guidance systems (e.g., guidance systems 202) described herein may perform one or more acts of the method 1200. Furthermore, for purposes of the description of FIG. 12, a transport vehicle 104 or transport vehicles 104 are referenced; however, it is understood that the method 1200 can be utilized with any of the transport vehicles (e.g., transport vehicle 402, 502, 602) described herein. Additionally, in some embodiments, one or more acts of the method 1200 may be performed by the control system 204 of the agricultural vehicle 106 and/or one or more remote devices (e.g., remote devices 708).

The method 1200 may include capturing sensor data including at least one representation of at least one transport vehicle via one or more sensors 208 of the guidance system 202, as shown in act 1202 of FIG. 12. For example, the guidance system 202 may cause sensor data, including at least one representation of at least one transport vehicle, to be captured via one or more sensors 208. In some embodiments, capturing sensor data including at least one representation of at least one transport vehicle may include capturing sensor data including at least one representation of at least one transport vehicle within an unloading area of an agricultural field. The one or more sensors 208 may include any of the sensors described herein, and the sensor data may include any of the sensor data described herein.

Capturing the sensor data may be triggered by the autonomous agricultural system 102 (FIG. 2) approaching an unloading gate and/or unloading area of an agricultural field (e.g., a designated area or structure where harvested crops are intended to be transferred from field equipment, such as, combines or grain carts, to transport vehicles or storage facilities). For example, responsive to the autonomous agricultural system 102 crossing a geofence and/or virtual boundary, the guidance system 202 of the autonomous agricultural system 102 may cause the one or more sensors 208 to capture sensor data related to the one or more transport vehicles 104. In additional embodiments, the guidance system 202 of the autonomous agricultural system 102 may monitor or be in communication with a device that monitors a geofence and/or virtual boundary and may cause the one or more sensors 208 to capture sensor data related to the one or more transport vehicles 104 responsive to crossing the geofence and/or virtual boundary.

The method 1200 may include determining whether the at least one transport vehicle 104 includes a single transport vehicle 104 or a plurality of transport vehicles 104, as shown in act 1204 of FIG. 12. For example, the guidance system 202 of the control system 204 of the agricultural vehicle 106 may detect how many transport vehicles 104 are present at an unloading area by determining how many transport vehicles 104 are represented within the captured sensor data. In some embodiments, determining whether the at least one transport vehicle 104 includes a single transport vehicle 104 or a plurality of transport vehicles 104 may include analyzing the sensor data captured by the one or more sensors 208. For example, the sensor data may be analyzed to identify and classify objects (e.g., the transport vehicles transport vehicle 104, living organisms, obstacles) depicted within the sensor data to determine how many transport vehicles are present within the unloading area. The sensor data may be analyzed via any of the manners described herein. Based on the transport vehicles 104 identified (e.g., detected) within the unloading area via the analysis, the guidance system 202 may determine whether the at least one transport vehicle 104 includes a single transport vehicle 104 or a plurality of transport vehicles 104. For instance, if only one transport vehicle 104 is detected, the guidance system 202 determines that the at least one transport vehicle 104 includes a single transport vehicle 104. Alternatively, if a plurality of transport vehicles 104 are detected, the guidance system 202 determines that the at least one transport vehicle 104 includes a plurality of transport vehicles 104.

In some embodiments, the method 1200 may include determining a position of the at least one transport vehicle 104 via any of the manners described herein. For instance, in some embodiments, the position of the at least one transport vehicle 104 may be determined via received position data. In additional embodiments, the position of the at least one transport vehicle 104 may be determined via analysis of the sensor data.

The method 1200 may further include, responsive to determining that the at least one transport vehicle 104 includes a single transport vehicle 104, causing the agricultural vehicle 106 to automatically align with the detected (e.g., identified) single transport vehicle 104, as shown in act 1206 of FIG. 12. For example, the guidance system 202 of the control system 204 of the agricultural vehicle 106 may control one or more actuators 704 and one or more operations (e.g., steering and propulsion) of the agricultural vehicle 106 and/or cart 108 to cause the agricultural vehicle 106 and/or cart 108 to align with the detected (e.g., identified) single transport vehicle 104 via any of the manners described above in regard to act 806 of FIG. 8.

Responsive to aligning the agricultural vehicle 106 and the cart 108 with the detected (e.g., identified) single transport vehicle 104, the method 1000 may optionally include causing the cart 108 to unload the commodity into the detected (e.g., identified) single transport vehicle 104 according to the manners described above in regard to act 814 of FIG. 8.

Referring still to FIG. 12, responsive to detecting a plurality of transport vehicles 104, the method 1200 may include analyzing the captured sensor data to identify a candidate target transport vehicle of the plurality of transport vehicles, as shown in act 1208 of FIG. 12. For example, the guidance system 202 may analyze the captured sensor data to identify a candidate target transport vehicle of the plurality of transport vehicles 104. For example, the sensor data may be analyzed via any of the manners described herein to identify transport vehicles 104 represented in the sensor data, and to identify a candidate target transport vehicle. In some embodiments, the candidate target transport vehicle may be identified based on a marker (e.g., marker 610a) via any of the manners described above in regard to FIG. 10. In additional embodiments, the candidate target transport vehicle may be identified using an RFID tag according to any of the manners described above in regard to FIG. 10. In yet further embodiments, the candidate target transport vehicle may be identified based on one or more of a color, brand, shape, size, or proximity of the candidate target transport vehicle. For example, identification data (e.g., identifying markers, identification number, color, brand, shape, or size) of an intended target transport vehicle may be stored within memory of the guidance system 202, and the captured sensor data may be analyzed to identify a candidate target transport vehicle that matches the stored identification data of the intended target transport vehicle.

Responsive to identifying a candidate target transport vehicle, the method 1200 may include activating a light emitting device 512 of the intended target transport vehicle, as shown in act 1210 of FIG. 12. For example, the guidance system 202 may activating a light emitting device 512 of the intended target transport vehicle. For example, responsive to identifying a candidate target transport vehicle, the guidance system 202 of the autonomous agricultural system 102 may initiate communication with a computing device 410 of the intended target transport vehicle via the wireless transceiver 212 of the guidance system 202. In some embodiments, the communication may include instruction to activate the light emitting device 512 of the intended target transport vehicle. The light emitting device 512 may include any of the light emitting devices 512 described above in regard to FIG. 5. Furthermore, the light emitting device 512 may be attached (e.g., mounted) to the intended target transport vehicle according to any of the manners described above in regard to FIG. 5.

In alternative embodiments, the light emitting device 512 may be activated manually from an operator of the target transport vehicle.

The method 1200 may further include detecting light emitted by the light emitting device 512 to verify the identified candidate target transport vehicle matches the intended target transport vehicle, as shown in act 1212 of FIG. 12. For example, the guidance system 202 may detect light emitted by the light emitting device 512 to verify the identified candidate target transport vehicle matches the intended target transport vehicle. The guidance system 202 may detect light emitted by the light emitting device 512 via one or more of the sensors 208. For instance, the guidance system 202 may cause the one or more sensor 208 to capture additional sensor data, and the additional sensor data may be analyzed via any of the manners described herein to detect light emitted by the light emitting device 512.

If the detected light is emitted from the identified candidate target transport vehicle, the candidate target transport vehicle is verified (e.g., confirmed) as the intended target transport vehicle. If the detected light is not emitted from the identified candidate target transport vehicle, an error is output to via the input/output device 206 requesting user input to select the intended target transport vehicle.

Responsive to identifying and verifying the candidate target transport vehicle, the method 1200 includes causing the agricultural vehicle 106 and the cart 108 to automatically align with the candidate target transport vehicle, as shown in act 1214 of FIG. 12. For example, the guidance system 202 may cause the agricultural vehicle 106 and the cart 108 to align with the candidate target transport vehicle via any of the manners described above in regard to act 806 of FIG. 8.

Responsive to aligning the agricultural vehicle 106 and the cart 108 with the candidate target transport vehicle, the method 1200 may optionally include causing the cart 108 to unload the commodity into the candidate target transport vehicle. For instance, the guidance system 202 may cause the cart 108 to unload the commodity according to any of the manners described above in regard to act 814 of FIG. 8.

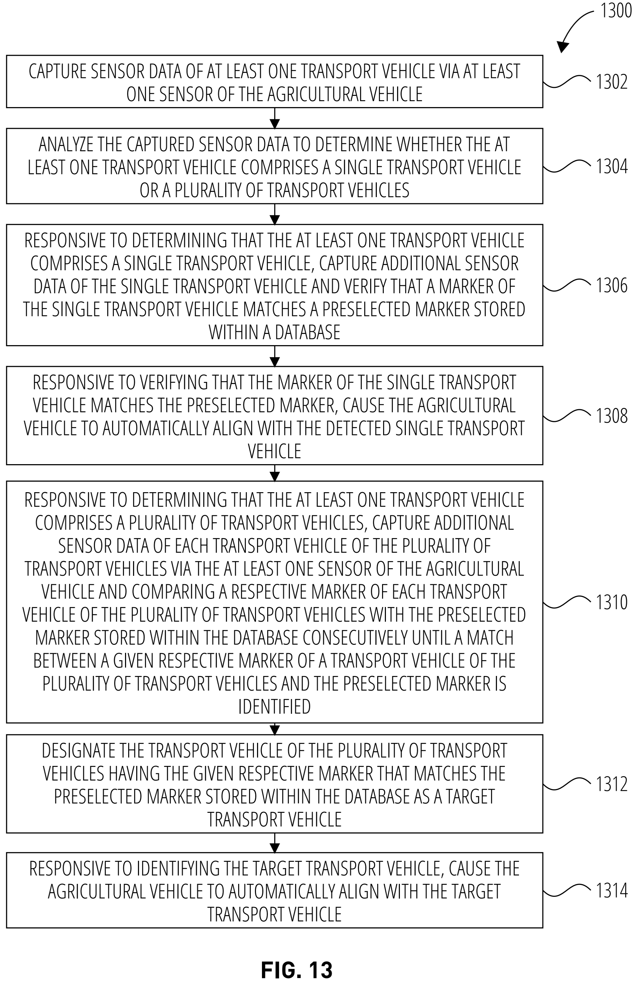

FIG. 13 shows a flowchart of a method 1300 of controlling operation an agricultural vehicle (e.g., agricultural vehicle 106) (e.g., a tractor) and/or a cart (e.g., cart 108) and aligning the agricultural vehicle and/or the cart within a transport vehicle during an agricultural process (e.g., a harvesting operation, unloading operation, etc.) according to one or more embodiments of the disclosure. In one or more embodiments, a guidance system (e.g., guidance systems 202) may perform one or more acts of the method 1300. For purposes of description of FIG. 13, the guidance system 202 is described as performing one or more acts of the method 1300; however, it is understood that any of the guidance systems (e.g., guidance systems 202) described herein may perform one or more acts of the method 1300. Furthermore, for purposes of the description of FIG. 13, a transport vehicle 104 or transport vehicles 104 are referenced; however, it is understood that the method 1300 can be utilized with any of the transport vehicles (e.g., transport vehicle 402, 502, 602) described herein. Additionally, in some embodiments, one or more acts of the method 1300 may be performed by the control system 204 of the agricultural vehicle 106 and/or one or more remote devices (e.g., remote devices 708).

The method 1300 may include capturing sensor data including at least one representation of at least one transport vehicle via one or more sensors 208 of the guidance system 202, as shown in act 1302 of FIG. 13. For example, the guidance system 202 may cause sensor data, including at least one representation of at least one transport vehicle, to be captured via one or more sensors 208. In some embodiments, capturing sensor data including at least one representation of at least one transport vehicle may include capturing sensor data including at least one representation of at least one transport vehicle within an unloading area of an agricultural field. The one or more sensors 208 may include any of the sensors described herein, and the sensor data may include any of the sensor data described herein.

Capturing the sensor data may be triggered by the autonomous agricultural system 102 (FIG. 2) approaching an unloading gate and/or unloading area of an agricultural field (e.g., a designated area or structure where harvested crops are intended to be transferred from field equipment, such as, combines or grain carts, to transport vehicles or storage facilities). For example, responsive to the autonomous agricultural system 102 crossing a geofence and/or virtual boundary, the guidance system 202 of the autonomous agricultural system 102 may cause the one or more sensors 208 to capture sensor data related to the one or more transport vehicles 104. In additional embodiments, the guidance system 202 of the autonomous agricultural system 102 may monitor or be in communication with a device that monitors a geofence and/or virtual boundary and may cause the one or more sensors 208 to capture sensor data related to the one or more transport vehicles 104 responsive to crossing the geofence and/or virtual boundary.

The method 1300 may include determining whether the at least one transport vehicle 104 includes a single transport vehicle 104 or a plurality of transport vehicles 104, as shown in act 1304 of FIG. 13. For example, the guidance system 202 of the control system 204 of the agricultural vehicle 106 may detect how many transport vehicles 104 are present at an unloading area by determining how many transport vehicles 104 are represented within the captured sensor data. In some embodiments, determining whether the at least one transport vehicle 104 includes a single transport vehicle 104 or a plurality of transport vehicles 104 may include analyzing the sensor data captured by the one or more sensors 208. For example, the sensor data may be analyzed to identify and classify objects (e.g., the transport vehicles transport vehicle 104, living organisms, obstacles) depicted within the sensor data to determine how many transport vehicles are present within the unloading area. The sensor data may be analyzed via any of the manners described herein. Based on the transport vehicles 104 identified (e.g., detected) within the unloading area via the analysis, the guidance system 202 may determine whether the at least one transport vehicle 104 includes a single transport vehicle 104 or a plurality of transport vehicles 104. For instance, if only one transport vehicle 104 is detected, the guidance system 202 determines that the at least one transport vehicle 104 includes a single transport vehicle 104. Alternatively, if a plurality of transport vehicles 104 are detected, the guidance system 202 determines that the at least one transport vehicle 104 includes a plurality of transport vehicles 104.

In some embodiments, the method 1300 may include determining a position of the at least one transport vehicle 104 via any of the manners described herein. For instance, in some embodiments, the position of the at least one transport vehicle 104 may be determined via received position data. In additional embodiments, the position of the at least one transport vehicle 104 may be determined via analysis of the sensor data.

Additionally, the method 1300 may include, responsive to determining that the at least one transport vehicle comprises a single transport vehicle, capturing additional sensor data of the single transport vehicle and verifying that a marker of the single transport vehicle matches a preselected marker stored within a database, as shown in act 1306 of FIG. 13. For example, the guidance system 202 may cause additional sensor data of the single transport vehicle to be captured and verify that a marker of the single transport vehicle matches a preselected marker stored within a database.

The additional sensor data may be captured via the one or more sensors 208 via nay of the manners desribed herein and may include any type of sensor data described herein.

In some embodiments, the marker may include any of the markers (e.g., markers 610a, 610b, 610c, 610d) described above. In additional embodiments, the marker may include a license plate. In yet further embodiments, the marker may include a vehicle decal or a particular geometric shape of the single transport vehicle 104.

Verifying that the marker of the single transport vehicle matches a preselected marker stored within a database may include analyzing the sensor data via any of the manners described herein to identify the marker within the sensor data or the additional sensor data. Furthermore, the identified marker may be compared to the preselected marker stored within the database of the guidance system 202.

Responsive to verifying that the marker of the single transport vehicle matches the preselected marker, causing the agricultural vehicle to automatically align with the detected (e.g., identified) single transport vehicle, as shown in act 1308 of FIG. 13. For example, the guidance system 202 of the control system 204 of the agricultural vehicle 106 may control one or more actuators 704 and one or more operations (e.g., steering and propulsion) of the agricultural vehicle 106 and/or cart 108 to cause the agricultural vehicle 106 and/or cart 108 to align with the detected (e.g., identified) single transport vehicle 104 via any of the manners described above in regard to act 806 of FIG. 8.

Responsive to determining that the at least one transport vehicle 104 includes a plurality of transport vehicles 104, capturing additional sensor data of each transport vehicle 104 of the plurality of transport vehicles 104 via the one or more sensors 208 of the agricultural vehicle 106 and comparing a respective marker of each transport vehicle 104 of the plurality of transport vehicles 104 with the preselected marker stored within the database consecutively until a match between a given respective marker of a transport vehicle 104 of the plurality of transport vehicles 104 and the preselected marker is identified, as shown in act 1310 of FIG. 13. For example, the guidance system 202 may cause the additional sensor data of each transport vehicle of the plurality of transport vehicles via the at least one sensor of the agricultural vehicle 106 to be captured and may comparing a respective marker of each transport vehicle of the plurality of transport vehicles with the preselected marker stored within the database consecutively until a match between a given respective marker of a transport vehicle of the plurality of transport vehicles and the preselected marker is identified.

The additional sensor data may be captured via the one or more sensors 208 via nay of the manners desribed herein and may include any type of sensor data described herein. The markers may include any of the markers described herein. The markers may be identified via any of the manners described herein. Furthermore, the identified markers may be compared to the preselected marker stored within the database via any of the manners described herein.

As mentioned above, act 1310 may be performed transport vehicle 104 by transport vehicle 104 of the plurality of transport vehicles 104. For example, each transport vehicle 104 of the plurality of transport vehicles 104 may be analyzed individually, and the transport vehicles 104 of the plurality of transport vehicles 104 may be analyzed one by one consecutively until a match between an identified marker and the preselected marker stored within the database is identified. In some embodiments, only a portion of the plurality of transport vehicles 104 is analyzed until a match between an identified marker and the preselected marker stored within the database is identified. In other embodiments, each of the plurality of transport vehicles 104 is analyzed to identify a match between an identified marker and the preselected marker stored within the database.

Responsive to identifying a match between an identified marker of a transport vehicle 104 of the plurality of transport vehicles 104 and the preselected marker stored within the database, the method 1300 includes designating the transport vehicle 104 of the plurality of transport vehicles having the given respective marker that matches the preselected marker stored within the database as a target transport vehicle, as shown in act 1312 of FIG. 13. For example, the guidance system 202 may designate the transport vehicle 104 of the plurality of transport vehicles having the given respective marker that matches the preselected marker stored within the database as a target transport vehicle.

Responsive to identifying the target transport vehicle 104 within the plurality of transport vehicles 104, the method 1300 includes causing the agricultural vehicle 106 to automatically align with the target transport vehicle 104, as shown in act 1314 of FIG. 13. For example, the guidance system 202 may cause the agricultural vehicle 106 and the cart 108 to align with the target transport vehicle 104 via any of the manners described above in regard to act 812 of FIG. 8.

Responsive to aligning the agricultural vehicle 106 and the cart 108 with the target transport vehicle 104, the method 1300 may optionally include causing the cart 108 to unload the commodity into the target transport vehicle 104 via any of the manners described above in regard to act 814 of FIG. 8.

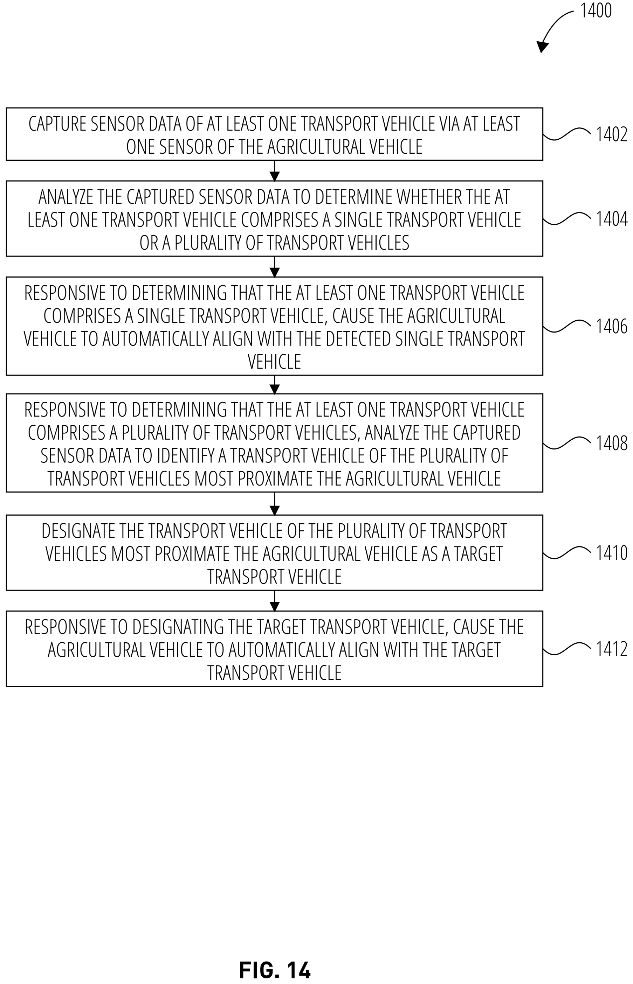

FIG. 14 illustrates an example method 1400 for controlling operation an agricultural vehicle (e.g., agricultural vehicle 106) (e.g., a tractor) and/or a cart (e.g., cart 108) and aligning the agricultural vehicle and/or the cart within a transport vehicle during an agricultural process (e.g., a harvesting operation, unloading operation, etc.) according to one or more embodiments of the disclosure. In one or more embodiments, a guidance system (e.g., guidance systems guidance system 202) may perform one or more acts of the method 1400. For purposes of description of FIG. 14, the guidance system 202 is described as performing one or more acts of the method 1300; however, it is understood that any of the guidance systems (e.g., guidance systems 202) described herein may perform one or more acts of the method 1400. Furthermore, for purposes of the description of FIG. 14, a transport vehicle 104 or transport vehicles 104 are referenced; however, it is understood that the method 1400 can be utilized with any of the transport vehicles (e.g., transport vehicle 402, 502, 602) described herein. Additionally, in some embodiments, one or more acts of the method 1400 may be performed by the control system 204 of the agricultural vehicle 106 and/or one or more remote devices (e.g., remote devices 708).

The method 1400 may include capturing sensor data including at least one representation of at least one transport vehicle via one or more sensors 208 of the guidance system 202, as shown in act 1402 of FIG. 14. For example, the guidance system 202 may cause sensor data, including at least one representation of at least one transport vehicle, to be captured via one or more sensors 208. In some embodiments, capturing sensor data including at least one representation of at least one transport vehicle may include capturing sensor data including at least one representation of at least one transport vehicle within an unloading area of an agricultural field. The one or more sensors 208 may include any of the sensors described herein, and the sensor data may include any of the sensor data described herein.

Capturing the sensor data may be triggered by the autonomous agricultural system 102 (FIG. 2) approaching an unloading gate and/or unloading area of an agricultural field (e.g., a designated area or structure where harvested crops are intended to be transferred from field equipment, such as, combines or grain carts, to transport vehicles or storage facilities). For example, responsive to the autonomous agricultural system 102 crossing a geofence and/or virtual boundary, the guidance system 202 of the autonomous agricultural system 102 may cause the one or more sensors 208 to capture sensor data related to the one or more transport vehicles 104. In additional embodiments, the guidance system 202 of the autonomous agricultural system 102 may monitor or be in communication with a device that monitors a geofence and/or virtual boundary and may cause the one or more sensors 208 to capture sensor data related to the one or more transport vehicles 104 responsive to crossing the geofence and/or virtual boundary.

The method 1400 may include determining whether the at least one transport vehicle 104 includes a single transport vehicle 104 or a plurality of transport vehicles 104, as shown in act 1404 of FIG. 14. For example, the guidance system 202 of the control system 204 of the agricultural vehicle 106 may detect how many transport vehicles 104 are present at an unloading area by determining how many transport vehicles 104 are represented within the captured sensor data. In some embodiments, determining whether the at least one transport vehicle 104 includes a single transport vehicle 104 or a plurality of transport vehicles 104 may include analyzing the sensor data captured by the one or more sensors 208. For example, the sensor data may be analyzed to identify and classify objects (e.g., the transport vehicles transport vehicle 104, living organisms, obstacles) depicted within the sensor data to determine how many transport vehicles are present within the unloading area. The sensor data may be analyzed via any of the manners described herein. Based on the transport vehicles 104 identified (e.g., detected) within the unloading area via the analysis, the guidance system 202 may determine whether the at least one transport vehicle 104 includes a single transport vehicle 104 or a plurality of transport vehicles 104. For instance, if only one transport vehicle 104 is detected, the guidance system 202 determines that the at least one transport vehicle 104 includes a single transport vehicle 104. Alternatively, if a plurality of transport vehicles 104 are detected, the guidance system 202 determines that the at least one transport vehicle 104 includes a plurality of transport vehicles 104.

In some embodiments, the method 1400 may include determining a position of the at least one transport vehicle 104 via any of the manners described herein. For instance, in some embodiments, the position of the at least one transport vehicle 104 may be determined via received position data. In additional embodiments, the position of the at least one transport vehicle 104 may be determined via analysis of the sensor data.

Responsive to determining that the at least one transport vehicle 104 comprises a single transport vehicle, the method 1400 includes causing the agricultural vehicle to automatically align with the detected (e.g., identified) single transport vehicle, as shown in act 1406 of FIG. 14. For example, the guidance system 202 of the control system 204 of the agricultural vehicle 106 may control one or more actuators 704 and one or more operations (e.g., steering and propulsion) of the agricultural vehicle 106 and/or cart 108 to cause the agricultural vehicle 106 and/or cart 108 to align with the detected (e.g., identified) single transport vehicle 104 via any of the manners described above in regard to act 806 of FIG. 8.

Responsive to determining that the at least one transport vehicle 104 includes a plurality of transport vehicles 104, the method 1400 includes analyzing the captured sensor data to identify a transport vehicle 104 of the plurality of transport vehicles 104 most proximate the agricultural vehicle 106, as shown in act 1408 of FIG. 14. For example, the guidance system 202 may analyze the captured sensor data to identify a transport vehicle 104 of the plurality of transport vehicles 104 most proximate the agricultural vehicle 106. For example, the sensor data may be analyzed via any of the manners described herein to identify transport vehicles 104 represented in the sensor data, and to determine distances between the agricultural vehicle 106 and the identified transport vehicles 104. For example, the distances may be determined via known methods such as triangle similarity methods, stereo vision methods, structure from motion (SfM) methods, using LIDAR and Time-of-flight sensors, or using depth cameras.

Responsive to identifying a transport vehicle 104 of the plurality of transport vehicles 104 most proximate the agricultural vehicle 106, the method 1400 includes designating the transport vehicle 104 of the plurality of transport vehicles 104 most proximate the agricultural vehicle 106 as a target transport vehicle, as shown in act 1410 of FIG. 14. For example, the guidance system 202 may designate the transport vehicle 104 of the plurality of transport vehicles 104 most proximate the agricultural vehicle 106 as a target transport vehicle.

Responsive to identifying the target transport vehicle 104 within the plurality of transport vehicles 104, the method 1400 includes causing the agricultural vehicle 106 to automatically align with the target transport vehicle 104, as shown in act 1400 of FIG. 14. For example, the guidance system 202 may cause the agricultural vehicle 106 and the cart 108 to align with the target transport vehicle 104 via any of the manners described above in regard to act 812 of FIG. 8.

Responsive to aligning the agricultural vehicle 106 and the cart 108 with the target transport vehicle 104, the method 1300 may optionally include causing the cart 108 to unload the commodity into the target transport vehicle 104 via any of the manners described above in regard to act 814 of FIG. 8.

FIG. 15 is a schematic view of the control system 204 and/or the guidance system 202, which may operate the agricultural vehicle 106 and/or the cart 108 according to some embodiments of the disclosure. Furthermore, FIG. 15 may represent the computing devices 410, 510 which may operate the transport vehicle 104 according to some embodiments of the disclosure. For ease of description, FIG. 15 is described herein with reference to the control system 204; however, the disclosure is not so limited, and the description of FIG. 15 is equally applicable to the guidance system 202 and the computing devices 410, 510.

The control system 204 may include a communication interface 1502, a processor 1504, a memory 1506, a storage device 1508, and a bus 1510 in addition to the input/output device 1512.

In some embodiments, the processor 1504 includes hardware for executing instructions, such as those making up a computer program. As an example, and not by way of limitation, to execute instructions, the processor 1504 may retrieve (or fetch) the instructions from an internal register, an internal cache, the memory 1506, or the storage device 1508 and decode and execute them. In some embodiments, the processor 1504 may include one or more internal caches for data, instructions, or addresses. As an example, and not by way of limitation, the processor 1504 may include one or more instruction caches, one or more data caches, and one or more translation look aside buffers (TLBs). Instructions in the instruction caches may be copies of instructions in the memory 1506 or the storage device 1508.

The memory 1506 may be coupled to the processor 1504. The memory 1506 may be used for storing data, metadata, and programs for execution by the processor(s). The memory 1506 may include one or more of volatile and non-volatile memories, such as Random-Access Memory ("RAM"), Read-Only Memory ("ROM"), a solid state disk ("SSD"), Flash, Phase Change Memory ("PCM"), or other types of data storage. The memory 1506 may be internal or distributed memory.

The storage device 1508 may include storage for storing data or instructions. As an example, and not by way of limitation, storage device 1508 can comprise a non-transitory storage medium described above. The storage device 1508 may include a hard disk drive (HDD), a floppy disk drive, Flash memory, an optical disc, a magneto-optical disc, magnetic tape, or a Universal Serial Bus (USB) drive or a combination of two or more of these. The storage device 1508 may include removable or non-removable (or fixed) media, where appropriate. The storage device 1508 may be internal or external to the computing storage device 1508. In one or more embodiments, the storage device 1508 is non-volatile, solid-state memory. In other embodiments, the storage device 1508 includes read-only memory (ROM). Where appropriate, this ROM may be mask programmed ROM, programmable ROM (PROM), erasable PROM (EPROM), electrically erasable PROM (EEPROM), electrically alterable ROM (EAROM), or Flash memory or a combination of two or more of these.

The communication interface 1502 can include hardware, software, or both. The communication interface 1502 may provide one or more interfaces for communication (such as, for example, packet-based communication) between the control system 204 and one or more other computing devices or networks (e.g., a server, etc.). As an example, and not by way of limitation, the communication interface 1502 may include a network interface controller (NIC) or network adapter for communicating with an Ethernet or other wire-based network or a wireless NIC (WNIC) or wireless adapter for communicating with a wireless network, such as a WI-FI.

In some embodiments, the bus 1510 (e.g., a Controller Area Network (CAN) bus) may include hardware, software, or both that couples components of control system 204 to each other and to external components.

The input/output device 1512 may allow an operator of the control system 204 to provide input to, receive output from, and otherwise transfer data to and receive data from control system 204. The input/output device 1512 may include a mouse, a keypad or a keyboard, a joystick, a touch screen, a camera, an optical scanner, network interface, modem, other known I/O devices or a combination of such I/O interfaces. The input/output device 1512 may include one or more devices for presenting output to an operator, including, but not limited to, a graphics engine, a display (e.g., a display screen), one or more output drivers (e.g., display drivers), one or more audio speakers, and one or more audio drivers. In certain embodiments, the input/output device 1512 is configured to provide graphical data to a display for presentation to an operator. The graphical data may be representative of one or more graphical user interfaces and/or any other graphical content as may serve a particular implementation. The input/output device 1512 may be utilized to display data (e.g., images and/or video data) received from the one or more image sensors and provide one or more recommendations of adjusting operation of the agricultural vehicle 106 and/or the cart 108 and/or video data to assist an operator in navigating the agricultural vehicle 106 and cart 108.

All references cited herein are incorporated herein in their entireties. If there is a conflict between definitions herein and in an incorporated reference, the definition herein shall control.

The embodiments of the disclosure described above and illustrated in the accompanying drawings do not limit the scope of the disclosure, which is encompassed by the scope of the appended claims and their legal equivalents. Any equivalent embodiments are within the scope of this disclosure. Indeed, various modifications of the disclosure, in addition to those shown and described herein, such as alternate useful combinations of the elements described, will become apparent to those skilled in the art from the description. Such modifications and embodiments also fall within the scope of the appended claims and equivalents.

## Claims

1. A guidance system for controlling operation of an agricultural vehicle, comprising:
at least one processor; and
at least one non-transitory computer-readable storage medium storing instructions thereon that, when executed by the at least one processor, cause the guidance system, during an agricultural operation, to:
capture image data of at least one transport vehicle via at least one sensor of the agricultural vehicle;
analyze the captured image data to determine whether the at least one transport vehicle comprises a single transport vehicle or a plurality of transport vehicles;
responsive to determining that the at least one transport vehicle comprises a single transport vehicle, capture additional image data of the single transport vehicle and verify that a marker of the single transport vehicle matches a preselected marker stored within a database;
responsive to verifying that the marker of the single transport vehicle matches the preselected marker, cause the agricultural vehicle to automatically align with the detected single transport vehicle;
responsive to determining that the at least one transport vehicle comprises a plurality of transport vehicles, capture additional image data of each transport vehicle of the plurality of transport vehicles via the at least one sensor of the agricultural vehicle and compare a respective marker of each transport vehicle of the plurality of transport vehicles with the preselected marker stored within the database consecutively until a match between a given respective marker of a transport vehicle of the plurality of transport vehicles and the preselected marker is identified,
identify the transport vehicle of the plurality of transport vehicles having the given respective marker that matches the preselected marker stored within the database as a target transport vehicle; and
responsive to identifying the target transport vehicle, cause the agricultural vehicle to automatically align with the target transport vehicle.

2. The guidance system of claim 1, further comprising instructions that, when executed by the at least one processor, cause the guidance system to determine a position of the target transport vehicle relative to the agricultural vehicle based at least partially on at least one of the captured image data or the captured additional image data.

3. The guidance system of claims 1 or 2, wherein the at least one sensor of the agricultural vehicle comprises at least one of a light detection and ranging (LIDAR) camera, an RGB camera, a stereo camera, a polarized camera, a thermal camera, an ultrasonic sensor, or a radio detection and ranging (RADAR) device.

4. The guidance system of any one of claims 1-3, wherein the at least one sensor of the agricultural vehicle comprises both an RGB camera and a light detection and ranging (LIDAR) camera.

5. The guidance system of any one of claims 1-3, wherein determining whether the at least one transport vehicle comprises a single transport vehicle or a plurality of transport vehicles comprises determining how many transport vehicles are present within an unloading area of an agricultural field.

6. The guidance system of claim 5, wherein determining how many transport vehicles are present within an unloading area of an agricultural field comprises analyzing the image data to detect how many transport vehicles are present within the unloading area of the agricultural field

7. The guidance system of claim 6, wherein analyzing the image data comprises utilizing one or more machine learning models to identify and classify one or more objects depicted within the image data.

8. The guidance system of claim 7, wherein analyzing the image data comprises utilizing a convolutional neural network (CNN) to identify and classify one or more objects depicted within the image data.

9. The guidance system of any one of claims 1-8, wherein capturing the image data related to at least one transport vehicle is triggered by the agricultural vehicle crossing a virtual boundary.

10. The guidance system of any one of claims 1-9, wherein causing the agricultural vehicle to automatically align with either the detected single transport vehicle or the target transport vehicle comprises determining a path between a current position of the agricultural vehicle and an aligned position relative to the detected single transport vehicle or the target transport vehicle.

11. The guidance system of claim 10, wherein the aligned position comprises a position and orientation of the agricultural vehicle relative to a determined position of the detected single transport vehicle or the target transport vehicle that aligns the agricultural vehicle for unloading a commodity into a trailer of the detected single transport vehicle or the target transport vehicle.

12. The guidance system of any one of claims 1-11, wherein the respective marker of each transport vehicle of the plurality of transport vehicles comprises a license plate.

13. The guidance system of any one of claims 1-12, wherein the respective marker of each transport vehicle of the plurality of transport vehicles comprises at least one of a text marker, a quick response (QR) code, a barcode, an aztec code, a data matrix code, a PDF417 code, a micro QR code, or an iQR code

14. The guidance system of any one of claims 1-13, wherein capturing additional image data of each transport vehicle of the plurality of transport vehicles via the at least one sensor of the agricultural vehicle consecutively until a match between a given respective marker of a transport vehicle of the plurality of transport vehicles and the preselected marker is identified comprises capturing additional image data of a number of transport vehicles that is fewer and a total number of transports vehicles of the plurality of transport vehicles.

15. A method of guiding operation of an agricultural vehicle during an agricultural operation, the method comprising:
capturing image data of at least one transport vehicle via at least one sensor of the agricultural vehicle;
analyzing the captured image data to determine whether the at least one transport vehicle comprises a single transport vehicle or a plurality of transport vehicles;
responsive to determining that the at least one transport vehicle comprises a single transport vehicle, capturing additional image data of the single transport vehicle and verify that a marker of the single transport vehicle matches a preselected marker stored within a database;
responsive to verifying that the marker of the single transport vehicle matches the preselected marker, causing the agricultural vehicle to automatically align with the detected single transport vehicle;
responsive to determining that the at least one transport vehicle comprises a plurality of transport vehicles, capturing additional image data of each transport vehicle of the plurality of transport vehicles via the at least one sensor of the agricultural vehicle and comparing a respective marker of each transport vehicle of the plurality of transport vehicles with the preselected marker stored within the database consecutively until a match between a given respective marker of a transport vehicle of the plurality of transport vehicles and the preselected marker is identified;
identifying the transport vehicle of the plurality of transport vehicles having the given respective marker that matches the preselected marker stored within the database as a target transport vehicle; and
responsive to identifying the target transport vehicle, causing the agricultural vehicle to automatically align with the target transport vehicle.
